# EUROPEAN PATENT APPLICATION

(11) **EP 4 765 799 A1**
(43) Date of publication of application: **24.06.2026**
(21) Application number: 24876092.8
(22) Date of filing: 18.06.2024
(51) Int. Cl.: H04N 13/398, H04N 13/341, H04N 13/00, H04N 13/332

(54) **COMMUNICATION METHOD, APPARATUS AND SYSTEM**

(30) Priority: 10.10.2023 CN 202311310266
(71) Applicant: Huawei Technologies Co., Ltd., Shenzhen, Guangdong 518129 (CN)
(72) Inventor: ZHANG, Jiacong, Shenzhen, Guangdong 518129 (CN); YANG, Hui, Shenzhen, Guangdong 518129 (CN); GONG, Shuqiang, Shenzhen, Guangdong 518129 (CN); YANG, Meiwen, Shenzhen, Guangdong 518129 (CN); SUN, Lue, Shenzhen, Guangdong 518129 (CN); ZHU, Dongyi, Shenzhen, Guangdong 518129 (CN); LI, Xin, Shenzhen, Guangdong 518129 (CN)
(74) Representative: Maiwald GmbH
(86) International application number: PCT/CN2024/099874
(87) International publication number: WO 2025/077269

(57) **Abstract**

A communication method, apparatus, and system are provided, and relate to the field of communication technologies. The communication system includes a communication apparatus, a wireless communication apparatus, and an electronic device. The communication apparatus and the wireless communication apparatus are connected wiredly, and the wireless communication apparatus and the electronic device are connected wirelessly. Synchronization information output by the communication apparatus is sent to the electronic device via the wireless communication apparatus. Feedback information sent by the electronic device is sent to the communication apparatus via the wireless communication apparatus. The communication apparatus includes a first communication interface and a second communication interface. The first communication interface sends synchronization information. The synchronization information is used to control the electronic device to perform a processing operation based on the synchronization information, so that the processing operation of the electronic device keeps synchronous with a processing operation of the communication apparatus. The second communication interface receives feedback information. The feedback information comes from the electronic device. The foregoing method can enhance interaction between the communication apparatus and the electronic device, thereby improving user experience.

## Description

### CROSS-REFERENCE TO RELATED APPLICATIONS

This application claims priority to Chinese Patent Application No. 202311310266.1, filed with the China National Intellectual Property Administration on October 10, 2023 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

With development of virtual reality technologies, 3D display technologies emerge. An active shutter 3D (active shutter 3D) technology is a currently widely used 3D display technology. Currently, the active shutter 3D technology is widely applied to display devices such as a television or a projector. A user wears active shutter 3D glasses to view a 3D video image displayed by the display device. The 3D glasses implement on-off switching of a left-eye liquid crystal display and a right-eye liquid crystal display based on 3D synchronization information sent by the display device, so that the user wearing the active shutter 3D glasses gains 3D viewing experience.

Currently, in a process of playing a 3D video based on the active shutter 3D technology, only the display device can unidirectionally send the 3D synchronization information to the 3D glasses. Consequently, interaction is poor, and user experience is affected.

### SUMMARY

Embodiments of this application provide a communication method, apparatus, and system, to enhance interaction between a communication apparatus and an electronic device, thereby improving service user experience.

Some embodiments of this application provide an architecture of a communication system. The system architecture includes a communication apparatus, a wireless communication apparatus, and an electronic device. The communication apparatus and the wireless communication apparatus are connected in a wired communication manner, and the wireless communication apparatus and the electronic device are connected in a wireless communication manner. The communication apparatus includes a first communication interface and a second communication interface.

The first communication interface in the communication apparatus may output synchronization information to the wireless communication apparatus. The wireless communication apparatus may convert the synchronization information into a first wireless signal and send the first wireless signal. The electronic device may receive the first wireless signal. The synchronization information is used to control the electronic device to perform a processing operation based on the synchronization information, so that the processing operation of the electronic device keeps synchronous with a processing operation of the communication apparatus.

The electronic device may convert, into a second wireless signal, feedback information that needs to be sent to the communication apparatus, and send the second wireless signal. The wireless communication apparatus may receive the second wireless signal, convert the second wireless signal, and send a converted second wireless signal to the second communication interface in the communication apparatus. The communication apparatus may parse out the feedback information based on the received information.

In another possible system architecture, functions of the wireless communication apparatus may be embedded into the communication apparatus, so that the communication apparatus has a capability of receiving and sending wireless signals. In this way, the wireless communication apparatus may not be needed in the system architecture.

Bidirectional communication may be implemented between the communication apparatus and the electronic device in the foregoing system architecture. In other words, the communication apparatus may not only send synchronization information to the electronic device, but also receive feedback information sent by the electronic device, to enhance interaction and enrich service scenarios, thereby improving user experience.

In the foregoing communication system in embodiments of this application, the communication apparatus may be a large-screen display device such as a smart screen or a projector, or may be a functional box separate from a display device such as a smart screen.

Specifically, embodiments of this application provide the following solutions:

According to a first aspect, a communication apparatus is provided. The communication apparatus may include a first communication interface and a second communication interface. The first communication interface is configured to send synchronization information. The synchronization information is used to control an electronic device to perform a processing operation based on the synchronization information, so that the processing operation of the electronic device keeps synchronous with a processing operation of the communication apparatus. The second communication interface is configured to receive feedback information. The feedback information comes from the electronic device.

In a possible implementation, the second communication interface is further configured to send control information, and the control information is used to control the electronic device. Therefore, interaction can be further enhanced, thereby improving user experience.

In a possible implementation, the communication apparatus includes a display apparatus configured to play a 3D video. The electronic device is 3D glasses. The synchronization information is 3D synchronization information. The 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video. Therefore, in a 3D display scenario, interaction can be enhanced, thereby improving user experience of watching a 3D video.

In a possible implementation, the communication apparatus further includes a processor. The processor is configured to perform corresponding processing based on feedback information from the 3D glasses. Performing corresponding processing includes performing one or more of the following processing operations: adjusting display of a 3D video, displaying prompt information, and sending control information to the 3D glasses. In this way, interaction can be enhanced.

Optionally, the feedback information includes connection status information of the 3D glasses, and performing corresponding processing includes: displaying a connection status of the 3D glasses on a screen of the display apparatus based on the connection status information of the 3D glasses. Alternatively, the feedback information includes battery level information of the 3D glasses, and performing corresponding processing includes: displaying a battery level of the 3D glasses on a screen of the display apparatus based on the battery level information of the 3D glasses; or when it is determined, based on the battery level information of the 3D glasses, that the battery level is lower than a specified threshold, displaying, on the screen, prompt information indicating that the battery level is low. Alternatively, the feedback information includes temperature information of the 3D glasses, and performing corresponding processing includes: when it is determined, based on the temperature information of the 3D glasses, that a temperature of the 3D glasses is higher than a specified threshold, displaying, on a screen of the display apparatus, prompt information indicating that the temperature is excessively high, and/or sending control information used to indicate the 3D glasses to perform overheat protection.

In a possible implementation, the feedback information includes wearing status information of the 3D glasses, and performing corresponding processing includes: if it is determined, based on the wearing status information of the 3D glasses, that the 3D glasses are taken off, performing one or more of the following operations immediately or after a specified duration: stopping a 3D video mode, switching to a 2D video mode, and sending control information used to control the 3D glasses to be off or asleep; or if it is determined, based on the wearing status information of the 3D glasses, that a wearing duration of the 3D glasses exceeds a specified threshold, performing one or more of the following operations: displaying, on the screen of the display apparatus, prompt information indicating that a wearing time expires, and sending control information used to control the 3D glasses to be off or asleep.

In a possible implementation, the feedback information includes position information of the 3D glasses, and performing corresponding processing includes performing one or more of the following processing operations: adjusting, based on the position information of the 3D glasses, an image visual range of the 3D video played by the display apparatus; adjusting, based on the position information of the 3D glasses, an image angle of view of the 3D video played by the display apparatus; and determining a posture of a wearer based on the position information of the 3D glasses and an image of the wearer of the 3D glasses, and providing a prompt when the posture of the wearer is incorrect, where the image is captured by the display apparatus.

In a possible implementation, the feedback information includes the position information of the 3D glasses and eyeball tracking information, and performing corresponding processing includes: determining, based on the position information and the eyeball tracking information, a motion trajectory of a line of sight on an image of the 3D video played by the display apparatus, and adjusting display of the image based on the motion trajectory; or determining, based on the position information and the eyeball tracking information, a point-of-gaze position of a line of sight on an image of the 3D video played by the display apparatus, and triggering, based on the point-of-gaze position, a menu function or a menu option of a corresponding area in the image.

In a possible implementation, the feedback information includes line-of-sight direction information of the 3D glasses, and performing corresponding processing includes: adjusting, based on a line-of-sight direction corresponding to the line-of-sight direction information, image display of the 3D video played by the display apparatus; or determining, based on a line-of-sight direction corresponding to the line-of-sight direction information, the point-of-gaze position of the line of sight on the image of the 3D video displayed by the display apparatus, and triggering, based on the point-of-gaze position, the menu function or the menu option of the corresponding area in the image.

In a possible implementation, the feedback information includes user operation information detected by the 3D glasses, and performing corresponding processing includes: determining, based on the user operation information, an operation requested to be performed, and performing the operation requested to be performed.

In a possible implementation, the communication apparatus includes a playing apparatus configured to play audio, the electronic device is a speaker, and the synchronization information is used to control audio playing of the speaker to keep synchronous with audio playing of the playing apparatus; or the communication apparatus includes a playing apparatus configured to play audio, the electronic device includes a light apparatus and/or a vibration apparatus, and the synchronization information is used to control light change of the light apparatus and/or vibration of the vibration apparatus to keep synchronous with a rhythm of audio played by the playing apparatus; or the communication apparatus includes a first light apparatus, the electronic device includes a second light apparatus, and the synchronization information is used to control light change of the second light apparatus to keep synchronous with light change of the first light apparatus; or the communication apparatus includes a first vibration apparatus, the electronic device includes a second vibration apparatus, and the synchronization information is used to control a vibration frequency of the second vibration apparatus to keep synchronous with a vibration frequency of the first vibration apparatus.

In a possible implementation, a first interface is disposed on the processor in the communication apparatus, and is configured to output the synchronization information. The communication apparatus further includes a switch. The switch is configured to: when it is determined to send the synchronization information to the electronic device, connect the first interface on the processor and the first communication interface.

Optionally, the switch is configured to: when the communication apparatus is connected to the electronic device, set the first communication interface to be configured to send the synchronization information. For example, the switch may connect the first interface on the processor and the first communication interface under control of the processor. For example, the processor may send control information (or referred to as a switch control instruction) to the switch, and the switch may connect the first interface on the processor and the first communication interface based on the control information. The first control information indicates to send the synchronization information to the electronic device.

Optionally, when the communication apparatus is connected to another type of electronic device, the switch may set the first communication interface to be used to send another type of information. For example, when the first communication interface is a universal serial bus (Universal Serial Bus, USB) interface, the first communication interface is set to perform a general data or signal transmission mode.

Optionally, a second interface is disposed on the processor in the communication apparatus, and is configured to: convert, into information to be processed by the processor, a physical layer electrical signal received by the second communication interface, and/or convert, into a physical layer electrical signal to be sent by the second communication interface, information output by the processor. The second communication interface is connected to the second interface on the processor, to implement bidirectional communication between the communication apparatus and the electronic device.

In a possible implementation, a universal communication interface is disposed on the communication apparatus, and the first communication interface may be at least one pin of the universal communication interface. Optionally, the second communication interface may be at least another pin in the universal communication interface. Optionally, the universal communication interface is a USB interface or an Ethernet interface. In the foregoing implementation, the universal communication interface on the display apparatus is reused to connect to the wireless communication apparatus, to output synchronization information. In comparison with a manner of using a dedicated interface to transmit synchronization information, this can save a communication interface, which facilitates space stacking and normalization design of the display apparatus, thereby reducing costs.

In a possible implementation, the processor is specifically configured to: when it is detected that the universal communication interface is connected to the wireless communication apparatus, control the switch to connect the first interface on the processor and the first communication interface. The wireless communication apparatus is configured to receive the synchronization information sent by the universal communication interface; convert the synchronization information into a first wireless signal, and send the first wireless signal to the electronic device; and receive a second wireless signal sent by the electronic device, convert the second wireless signal into feedback information, and send the feedback information to the universal communication interface.

In a possible implementation, the functions of the wireless communication apparatus may be integrated into the communication apparatus. A specific implementation of integrating the functions of the wireless communication apparatus into the communication apparatus is: connecting the wireless communication apparatus (or referred to as a wireless communication module) to the first communication interface of the communication apparatus. The wireless communication apparatus is configured to: convert the synchronization information from the first communication interface into the first wireless signal, and send the first wireless signal. Another specific implementation of integrating the functions of the wireless communication apparatus into the communication apparatus is: directly converting the synchronization information into the first wireless signal by using the first communication interface, and sending the first wireless signal. Specifically, the first communication interface is specifically configured to: convert the synchronization information into the first wireless signal, and send the first wireless signal. Further, the second communication interface is specifically configured to: receive the second wireless signal from the electronic device, and convert the second wireless signal into the feedback information.

According to a second aspect, a wireless communication apparatus is provided. The wireless communication apparatus includes a first communication interface, a digital processing module, and a second communication interface. The first communication interface is configured to: connect to a communication apparatus, receive synchronization information from the communication apparatus, and send feedback information to the communication apparatus. The synchronization information is used to control an electronic device to perform a processing operation based on the synchronization information, so that the processing operation of the electronic device keeps synchronous with a processing operation of the communication apparatus. The digital processing module is configured to encode the synchronization information. The second communication interface is configured to: modulate the encoded synchronization information into a first wireless signal, send the first wireless signal, and receive and demodulate a second wireless signal from the electronic device. The digital processing module is further configured to encode demodulated information, to obtain the feedback information.

In a possible implementation, the first communication interface is further configured to receive control information from the communication apparatus. The control information is used to control the electronic device. The digital processing module is further configured to encode the control information. The second communication interface is further configured to: modulate the encoded control information into a third wireless signal, and send the third wireless signal.

In a possible implementation, the communication apparatus includes a display apparatus configured to play a 3D video. The electronic device is 3D glasses. The synchronization information is 3D synchronization information. The 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

In a possible implementation, the feedback information includes one or more of the following information: connection status information of the 3D glasses; battery level information of the 3D glasses; temperature information of the 3D glasses; wearing status information of the 3D glasses; position information of the 3D glasses; position information of the 3D glasses and eyeball tracking information; line-of-sight direction information of the 3D glasses; and user operation information detected by the 3D glasses.

In a possible implementation, the control information includes one or more of the following information: control information used to indicate the 3D glasses to perform overheat protection; and control information used to control the 3D glasses to be off or asleep.

According to a third aspect, an electronic device is provided. The electronic device includes a processing module and a communication interface. The processing module is configured to: receive synchronization information from the communication apparatus via the communication interface, and perform a processing operation based on the synchronization information, so that the processing operation of the electronic device keeps synchronous with a processing operation of the communication apparatus; and detect feedback information, and send the feedback information via the communication interface.

In a possible implementation, the processing module is further configured to: receive control information from the communication apparatus via the communication interface, and perform a processing operation based on the control information.

In a possible implementation, the electronic device is 3D glasses. The communication apparatus includes a display apparatus configured to play a 3D video. The synchronization information is 3D synchronization information. The 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

In a possible implementation, the feedback information includes one or more of the following information: connection status information of the 3D glasses; battery level information of the 3D glasses; temperature information of the 3D glasses; wearing status information of the 3D glasses; position information of the 3D glasses; position information of the 3D glasses and eyeball tracking information; line-of-sight direction information of the 3D glasses; and user operation information detected by the 3D glasses.

In a possible implementation, the control information includes one or more of the following information: control information used to indicate the 3D glasses to perform overheat protection; and control information used to control the 3D glasses to be off or asleep.

In a possible implementation, the processing module includes: a driving unit, configured to control on-off of the first liquid crystal display and the second liquid crystal display of the 3D glasses based on the 3D synchronization information; a detection unit, configured to detect the feedback information; and a control unit, configured to perform a processing operation based on the control information.

In a possible implementation, a digital processing module is further included. The communication interface is configured to receive and demodulate a first wireless signal. The digital processing module is configured to decode demodulated information, to obtain the synchronization information. The digital processing module is further configured to encode the feedback information from the feedback module. The communication interface is further configured to: modulate the encoded information to obtain a second wireless signal, and send the second wireless signal.

In a possible implementation, the communication interface is further configured to receive and demodulate a third wireless signal. The third wireless signal comes from the communication apparatus. The digital processing module is further configured to decode demodulated information, to obtain control information from the communication apparatus.

According to a fourth aspect, a communication method is provided. The communication method is applied to a communication apparatus. The method includes the following steps: sending synchronization information, where the synchronization information is used to control an electronic device to perform a processing operation based on the synchronization information, so that the processing operation of the electronic device keeps synchronous with a processing operation of the communication apparatus; and receiving feedback information, where the feedback information comes from the electronic device.

In a possible implementation, the method further includes: sending control information, where the control information is used to control the electronic device.

In a possible implementation, the communication apparatus includes a display apparatus configured to play a 3D video. The electronic device is 3D glasses. The synchronization information is 3D synchronization information. The 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

In a possible implementation, the method further includes: performing corresponding processing based on the feedback information, where performing corresponding processing includes performing one or more of the following processing operations: adjusting display of a 3D video, displaying prompt information, and sending control information to the 3D glasses.

In a possible implementation, the communication apparatus includes a playing apparatus configured to play audio, the electronic device is a speaker, and the synchronization information is used to control audio playing of the speaker to keep synchronous with audio playing of the playing apparatus; or the communication apparatus includes a playing apparatus configured to play audio, the electronic device includes a light apparatus and/or a vibration apparatus, and the synchronization information is used to control light change of the light apparatus and/or vibration of the vibration apparatus to keep synchronous with a rhythm of audio played by the playing apparatus; or the communication apparatus includes a first light apparatus, the electronic device includes a second light apparatus, and the synchronization information is used to control light change of the second light apparatus to keep synchronous with light change of the first light apparatus; or the communication apparatus includes a first vibration apparatus, the electronic device includes a second vibration apparatus, and the synchronization information is used to control a vibration frequency of the second vibration apparatus to keep synchronous with a vibration frequency of the first vibration apparatus.

For the feedback information and/or the control information, refer to the related content in the first aspect.

According to a fifth aspect, a communication system is provided. The communication system includes the communication apparatus (not integrated with the functions of the wireless communication apparatus) according to any implementation of the first aspect and the wireless communication apparatus according to any implementation of the second aspect; or includes the wireless communication apparatus according to any implementation of the second aspect and the electronic device according to any implementation of the third aspect; or includes the communication apparatus (not integrated with the functions of the wireless communication apparatus) according to any implementation of the first aspect, the wireless communication apparatus according to any implementation of the second aspect, and the electronic device according to any implementation of the third aspect.

According to a sixth aspect, a communication system is provided. The communication system includes the communication apparatus (integrated with the functions of the wireless communication apparatus) according to a possible implementation of the first aspect and the electronic device according to any implementation of the third aspect. The communication apparatus includes a first communication interface and a second communication interface. The first communication interface is configured to: convert synchronization information into a first wireless signal, and send the first wireless signal. The synchronization information is used to control an electronic device to perform a processing operation based on the synchronization information, so that the processing operation of the electronic device keeps synchronous with a processing operation of the communication apparatus. The second communication interface is configured to: receive a second wireless signal from the electronic device, and convert the second wireless signal into feedback information.

According to a seventh aspect, an apparatus is provided. The apparatus includes a module configured to perform the method according to any implementation of the fourth aspect.

According to an eighth aspect, an apparatus is provided. The apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method according to any implementation of the fourth aspect by using a logic circuit or by executing code instructions.

According to a ninth aspect, a computer-readable storage medium is provided. The computer-readable storage medium stores a computer program or instructions. When the computer program or the instructions are executed by a communication apparatus, the method according to any implementation of the fourth aspect is implemented.

According to a tenth aspect, a chip system is provided, including: a memory, configured to store a computer program; and a processor. After the processor invokes the computer program from the memory and runs the computer program, a communication apparatus on which the chip system is installed is enabled to perform the method according to any implementation of the fourth aspect.

According to an eleventh aspect, a computer program product is provided. When the computer program product runs on a communication apparatus, the communication apparatus is enabled to perform the method according to any implementation of the fourth aspect.

### BRIEF DESCRIPTION OF DRAWINGS

FIG. 1 is a diagram of an architecture of a communication system to which an embodiment of this application is applicable;
FIG. 2 is a diagram of an architecture of a 3D display system to which an embodiment of this application is applicable;
FIG. 3 is a diagram of a logic architecture of a 3D display system to which an embodiment of this application is applicable;
FIG. 4 is a diagram of a principle of an active shutter 3D technology to which an embodiment of this application is applicable;
FIG. 5 is a diagram of position information of 3D glasses according to an embodiment of this application;
FIG. 6 is a diagram of adjusting 3D display based on height change of a wearer of 3D glasses according to an embodiment of this application;
FIG. 7 is a diagram of 3D glasses with eyeball tracking detection and position detection functions according to an embodiment of this application;
FIG. 8 is a diagram of an architecture of a 3D display system using directional positioning according to an embodiment of this application;
FIG. 9 is a diagram of a dedicated interface (3D SYNC interface) for outputting 3D synchronization information in related technologies;
FIG. 10 is a diagram of a USB Type-C interface according to an embodiment of this application;
FIG. 11 is a diagram of a structure of a display apparatus according to an embodiment of this application;
FIG. 12 is a diagram of a structure of a display apparatus for transmitting 3D synchronization information via a USB interface according to an embodiment of this application;
FIG. 13 is a diagram of a structure of a wireless communication apparatus according to an embodiment of this application;
FIG. 14 is a diagram of a structure of 3D glasses according to an embodiment of this application;
FIG. 15 is a schematic flowchart of a display method according to an embodiment of this application; and
FIG. 16 is a diagram of a structure of an apparatus according to an embodiment of this application.

### DESCRIPTION OF EMBODIMENTS

The following describes embodiments of this application in detail with reference to accompanying drawings.

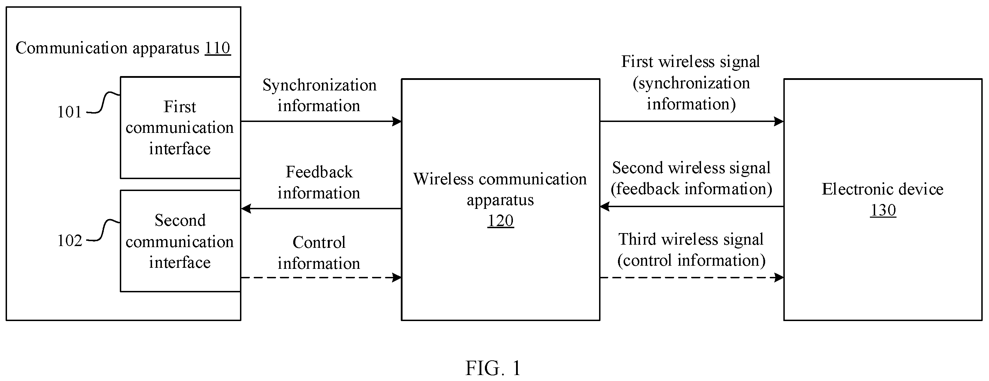

FIG. 1 is a diagram of an architecture of a communication system to which an embodiment of this application is applicable. As shown in FIG. 1, the system architecture includes a communication apparatus 110, a wireless communication apparatus 120, and an electronic device 130. The communication apparatus 110 and the wireless communication apparatus 120 are connected in a wired communication manner, for example, connected through a cable or directly connected through insertion. The wireless communication apparatus 120 and the electronic device 130 are connected in a wireless communication manner. The communication apparatus 110 may include a first communication interface 101 and a second communication interface 102.

Optionally, the wireless communication manner may be, for example, infrared communication, Bluetooth communication, radio frequency communication, or another agreed wireless communication manner. This is not limited in this embodiment of this application.

The first communication interface 101 in the communication apparatus 110 may output synchronization information to the wireless communication apparatus 120. The wireless communication apparatus 120 may convert the synchronization information into a first wireless signal and send the first wireless signal. The electronic device 130 may receive the first wireless signal. The synchronization information is used to control the electronic device 130 to perform a processing operation based on the synchronization information, so that the processing operation of the electronic device 130 keeps synchronous with a processing operation of the communication apparatus 110. Optionally, the first wireless signal may be sent in a broadcast manner.

The electronic device 130 may convert, into a second wireless signal, feedback information that needs to be sent to the communication apparatus 110, and send the second wireless signal. The wireless communication apparatus 120 may receive the second wireless signal, convert the second wireless signal, and send a converted second wireless signal to the second communication interface 102 in the communication apparatus 110. The communication apparatus 110 may parse out the feedback information based on the received information. Optionally, the second wireless signal may be sent in a broadcast manner.

Optionally, the second communication interface 102 in the communication apparatus 110 may further send, to the wireless communication apparatus 120, control information used to control the electronic device 130. The wireless communication apparatus 120 may convert the control information into a third wireless signal and send the third wireless signal. The electronic device 130 may receive the third wireless signal, parse out the control information based on the third wireless signal, and perform a corresponding processing operation based on the control information. Optionally, the third wireless signal may be sent in a broadcast manner.

In another possible system architecture, functions of the wireless communication apparatus 120 may be embedded into the communication apparatus 110, so that the communication apparatus has a capability of receiving and sending wireless signals. In this way, the wireless communication apparatus may not be needed in the system architecture.

Bidirectional communication may be implemented between the communication apparatus 110 and the electronic device 130 in the foregoing system architecture. In other words, the communication apparatus 110 may not only send synchronization information to the electronic device 130, but also receive feedback information sent by the electronic device 130, to enhance interaction and enrich service scenarios, thereby improving user experience.

The system architecture shown in FIG. 1 may be applied to a 3D display scenario. In this scenario, the communication apparatus 110 may be a display apparatus that can play a 3D video. The display apparatus may be a large-screen display device, for example, may be a television set or a smart screen, or may be a projector, or may be a device that supports 3D format decoding and has a display function, such as a personal computer (personal computer, PC). This is not limited in this embodiment of this application. Alternatively, the display device may be a related component that is in a device such as a smart screen, a television set, or a projector and that is configured to implement video playing. The related component may include a hardware component, or include a software component, or include a hardware component and a software component. The electronic device 130 may be 3D glasses. The synchronization information is 3D synchronization information (3D SYNC). The 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

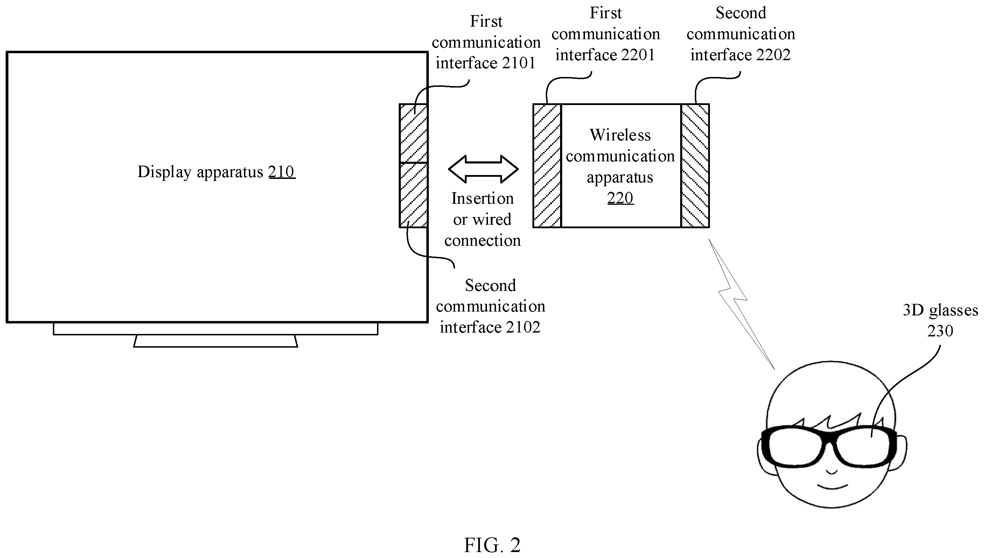

FIG. 2 is a diagram of an example of a system architecture in a 3D display scenario. The application scenario includes a display apparatus 210, a wireless communication apparatus 220, and 3D glasses 230. The display apparatus 210 and the 3D glasses 230 support an active shutter 3D technology. A first communication interface 2101 and a second communication interface 2102 are disposed on the display apparatus 210. The first communication interface 2101 may support unidirectional communication, and the second communication interface 2102 may support bidirectional communication. A first communication interface 2201 and a second communication interface 2202 are disposed on the wireless communication apparatus 220. The first communication interface 2201 supports a wired communication manner, and the second communication interface 2202 supports a wireless communication manner. A communication interface (not shown in the figure) is disposed on the 3D glasses 230. The communication interface supports a wireless communication manner.

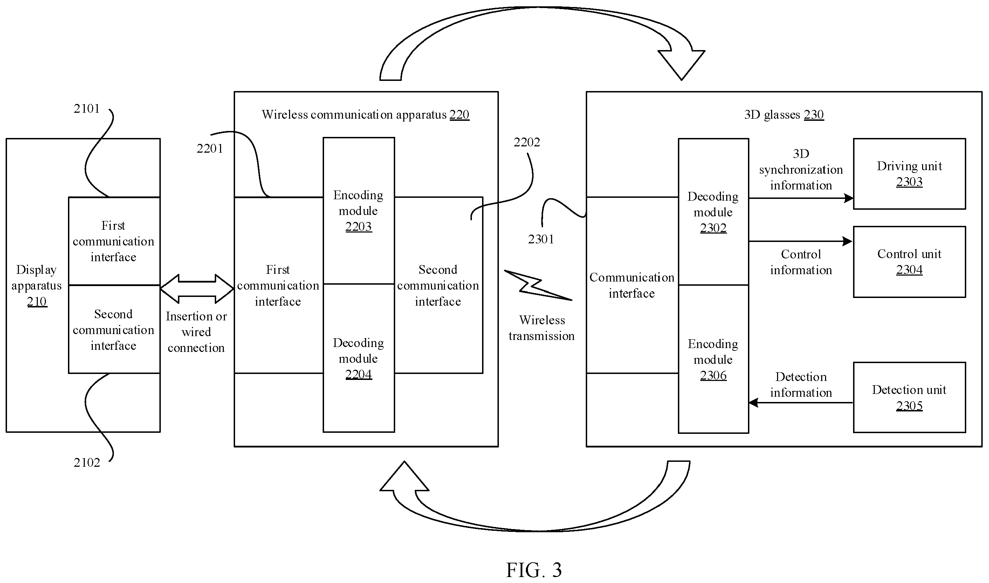

Based on the system architecture shown in FIG. 2, FIG. 3 describes, from a perspective of a logical function, a system architecture that can implement the display method provided in embodiments of this application.

As shown in FIG. 3, the first communication interface 2101 and the second communication interface 2102 on the display apparatus 210 may be connected to the first communication interface 2201 on the wireless communication apparatus 220 through insertion or through a cable. In a transmission direction from the display apparatus 210 to the 3D glasses 230, 3D synchronization information can be sent, feedback information can be received, and control information can be further sent.

The wireless communication apparatus 220 includes an encoding module 2203 and a decoding module 2204. The encoding module 2203 may encode 3D synchronization information from the display apparatus 210. The encoded information is modulated by the second communication interface 2202 into a first wireless signal, and the first wireless signal is transmitted through broadcasting. The communication interface 2301 in the 3D glasses receives and demodulates the first wireless signal. The decoding module 2302 decodes a demodulated signal to obtain the 3D synchronization information, and sends the 3D synchronization information to a driving unit 2303. The driving unit 2303 may control an on-off status of left-eye and right-eye liquid crystal displays based on the 3D synchronization information.

Optionally, a detection unit 2305 in the 3D glasses 230 may send detected feedback information to an encoding module 2306, and the encoding module 2306 encodes the feedback information. The encoded information is modulated by the communication interface 2301 into a second wireless signal. The second wireless signal is sent through broadcasting via the communication interface 2301. The second wireless signal is received and demodulated by the second communication interface 2202 in the wireless communication apparatus 220. A decoding module 2204 in the wireless communication apparatus 220 decodes a demodulated signal to obtain the feedback information, and sends the feedback information to the second communication interface 2102 in the display apparatus 210 via the first communication interface 2201.

Optionally, the display apparatus 210 may further send control information and/or data to the wireless communication apparatus 220 via the second communication interface 2102. The encoding module 2203 in the wireless communication apparatus 220 encodes the control information and/or the data, then modulates the control information and/or the data into a third wireless signal by using the second communication interface 2202, and sends the third wireless signal through broadcasting. After receiving the third wireless signal, the decoding module 2302 in the 3D glasses 230 decodes the third wireless signal to obtain the control information and/or the data, and sends the control information and/or the data to the control unit 2304 for corresponding processing.

It may be understood that, in the wireless communication apparatus 220 and/or the 3D glasses 230, signal encoding and decoding functions may be implemented by using a digital processing module, signal modulation and demodulation functions may be implemented by using a wireless communication module (or a wireless communication interface), and a modulated wireless signal may be transmitted via an antenna. The digital processing module and the wireless communication module may be implemented by using software, hardware, or a combination of software and hardware. For example, the digital processing module may be implemented by using a digital processing circuit, and the wireless communication module (or the wireless communication interface) may be implemented by using a wireless communication circuit or a wireless communication chip.

The system architecture shown in FIG. 1 may also be applied to an audio synchronization application scenario. In this scenario, the communication apparatus 110 may be a playing apparatus that can play audio. For example, the playing apparatus may be a smart screen, a smart television, a smart speaker, or a projector, or may be a related component that is in a device such as a smart screen, a smart television, or a smart speaker and that is configured to implement audio playing. The related component may include a hardware component, or include a software component, or include a hardware component and a software component. The electronic device 130 may be a speaker or another device that can play audio. A smart screen and a speaker are used as examples. The synchronization information is used to synchronize audio playing of the speaker with audio playing of the smart screen. In a possible implementation, the synchronization information may be an audio clock signal. For example, the audio clock signal may be a periodic radio wave signal, and more specifically, may be a periodic signal such as a square wave signal, a sine wave signal, or a cosine wave signal. In addition, a frequency and/or a phase of the periodic signal are/is correlated with (for example, the frequency and/or the phase are/is the same as) a frequency and/or a phase of an audio clock signal of the smart screen. Correspondingly, the speaker may generate, based on the received periodic signal, an audio clock signal synchronous with the smart screen, and control audio playing based on the audio clock signal, to implement audio synchronization. In another possible implementation, the synchronization information may be information used to implement wireless communication clock synchronization between the smart screen and the speaker. For example, the synchronization information may be a time synchronization frame periodically sent by the smart screen. When wireless communication clock synchronization is kept between the smart screen and the speaker, the smart screen device and the speaker may generate an audio clock signal based on a wireless communication clock signal, to implement audio clock signal synchronization, thereby implementing audio synchronization.

The system architecture shown in FIG. 1 may be further applied to a lighting effect synchronization application scenario. In an example of the lighting effect synchronization scenario, the communication apparatus 110 may be a playing apparatus that can play audio. For example, the playing apparatus may be a smart screen, a smart television, a smart speaker, or a projector, or may be a related component that is in a device such as a smart screen, a smart television, or a smart speaker and that is configured to implement audio playing. The related component may include a hardware component, or include a software component, or include a hardware component and a software component. The electronic device 130 may be a light apparatus, and the light apparatus may be an ambient light device, or a related component that is in the electronic device and that is configured to implement lighting effect. The synchronization information is used to control light change of the light apparatus to keep synchronous with a rhythm of audio played by the playing apparatus. A smart screen and an ambient light are used as examples. The smart screen may generate synchronization information based on a rhythm of played music, and send the synchronization information to the ambient light in the foregoing manner. The ambient light may control light change based on the synchronization information, to implement effect of synchronization between the light change and the music rhythm. In another example of the lighting effect synchronization scenario, the communication apparatus 110 may be a first light apparatus, and the electronic device 130 may be a second light apparatus. The synchronization information is used to control light change of the second light apparatus to keep synchronous with light change of the first light apparatus. For example, light change frequencies of the first light apparatus and the second light apparatus keep synchronous.

The system architecture shown in FIG. 1 may be further applied to a vibration synchronization application scenario. In an example of the vibration synchronization scenario, the communication apparatus 110 may be a playing apparatus that can play audio. For example, the playing apparatus may be a smart screen, a smart television, or a smart speaker, or may be a related component that is in a device such as a smart screen, a smart television, or a smart speaker and that is configured to implement audio playing. The related component may include a hardware component, or include a software component, or include a hardware component and a software component. The electronic device 130 may be a vibration apparatus. The vibration apparatus can generate vibration effect. The synchronization information is used to control vibration of the vibration apparatus to keep synchronous with a rhythm of audio played by the playing apparatus. A smart screen is used as an example. The smart screen may generate synchronization information based on a rhythm of played music, and send the synchronization information to the vibration apparatus in the foregoing manner. The vibration apparatus may control a vibration frequency based on the synchronization information, to implement effect of synchronization between the vibration frequency and the music rhythm. In another example of the vibration synchronization scenario, the communication apparatus 110 may be a first vibration apparatus, the electronic device 130 may be a second vibration apparatus, and the synchronization information is used to control a vibration frequency of the second vibration apparatus to keep synchronous with a vibration frequency of the first vibration apparatus.

It may be understood that the foregoing merely lists several application scenarios in the system architecture shown in FIG. 1 as examples, and a type of the application scenario is not limited in embodiments of this application. The following mainly uses a 3D display application scenario as an example for description. An implementation principle in another type of scenario is similar to an implementation principle in the 3D display scenario.

This application relates to an active shutter 3D technology. To better understand embodiments of this application, the following first describes the active shutter 3D technology.

The active shutter 3D technology is mainly used to improve an image refresh rate and divide image frames into two groups of images corresponding to a left eye and a right eye. The two groups of images are referred to as left-eye images and right-eye images. The two groups of images are alternately displayed continuously. In addition, a signal transmitter sends a 3D synchronization (3D SYNC) signal to active shutter 3D glasses (referred to as 3D glasses below) to control on-off of a left-eye liquid crystal display and a right-eye liquid crystal display of the 3D glasses, so that the two groups of images are viewed by the left and right eyes respectively. In other words, the left eye of a wearer of the 3D glasses can see the left-eye images at a correct moment, and the right eye can see the right-eye images at a correct moment. Therefore, by using a persistence of vision mechanism of human eyes, binocular disparity is generated after superimposition of the images of the two eyes, and a 3D stereoscopic image is further synthesized in the brain. The left-eye liquid crystal display and the right-eye liquid crystal display of the 3D glasses are white (that is, transparent) in normal cases. When a specific voltage is applied, the liquid crystal display turns black (that is, transmittance decreases).

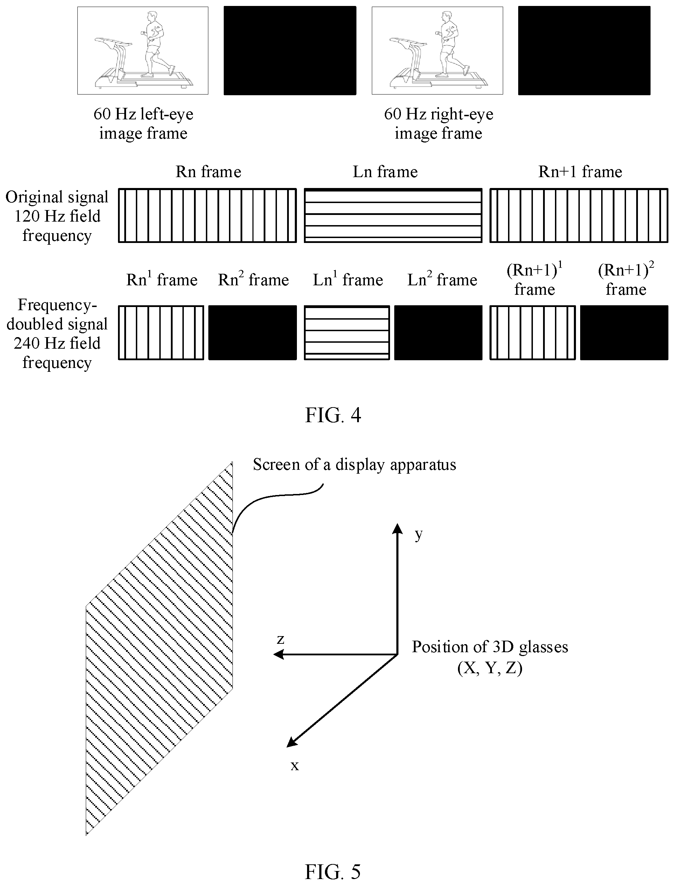

FIG. 4 shows an example of a principle of an active shutter 3D technology. As shown in the figure, after 3D image data (an original signal shown in the figure) is input to a display device, the display device processes a 120 Hz image frame into two frames through frequency doubling processing. For example, frequency doubling is performed on an original image frame Rn corresponding to a right eye to generate image frames Rn¹ and Rn², frequency doubling is performed on an original image frame Ln corresponding to a left eye to generate image frames Ln¹ and Ln², frequency doubling is performed on an original image frame Rn+1 corresponding to the right eye to generate image frames (Rn+1)¹ and (Rn+1)², and so on. The image frames Rn², Ln², and (Rn+1)² are black frames or gray frames, to reduce crosstalk between a left-eye image and a right-eye image. The display device alternately displays the left-eye image and the right-eye image at a frequency of 120 Hz. In this way, the left-eye image and the right-eye image each correspond to 60 Hz. In addition, the display device transmits a 3D synchronization signal by using a signal transmitter, and 3D glasses control on-off of a left-eye liquid crystal display and a right-eye liquid crystal display based on the 3D synchronization signal. An example of the 3D synchronization signal is a square wave signal. A high-level periodicity of the 3D synchronization signal corresponds to the left-eye image. The left-eye liquid crystal display of the 3D glasses is white (that is, in an on state), and the right-eye liquid crystal display is black (that is, in an off state). A low-level periodicity of the 3D synchronization signal corresponds to the right-eye image. The right-eye liquid crystal display of the 3D glasses is white, and the left-eye liquid crystal display is black.

In a 3D display application scenario, in this embodiment of this application, when the display apparatus is supported in unidirectionally transmitting 3D synchronization information to the 3D glasses via a wireless communication apparatus, the 3D glasses may further send feedback information to the display apparatus via the wireless communication apparatus, to implement bidirectional communication between the display apparatus and the 3D glasses, thereby forming a closed-loop system and implementing intelligent interaction experience.

Optionally, the feedback information may include one or more of the following information: status information of the 3D glasses, position information of the 3D glasses, eyeball tracking detection, line-of-sight direction information, user operation information, and the like.

For example, the status information of the 3D glasses may include one or more of the following information: connection status information of the 3D glasses, battery level information of the 3D glasses, wearing status information of the 3D eye, temperature information of the 3D eye, and the like.

The following provides several examples of possible intelligent interaction based on different types of feedback information.

### Example 1

3D glasses may send, to a display apparatus via a wireless communication apparatus, connection status information detected by the 3D glasses. The display apparatus may perform corresponding processing based on the connection status information sent by the 3D glasses.

A connection status of the 3D glasses may include successful connection, failed connection, and the like. Further, a status of the failed connection can be further subdivided based on a cause of the failed connection. The 3D glasses may send the connection status information after establishing communication connection to the wireless communication apparatus, in a process of establishing communication connection, or at another time.

The connection status information of the 3D glasses may be detected by a detection unit in the 3D glasses. The detection unit may be a software functional module. The software functional module may obtain a current connection status by invoking an application programming interface for querying a connection status.

Optionally, after obtaining the connection status, the 3D glasses may control, based on the current connection status, an indicator disposed on the 3D glasses to perform display, to prompt the current connection status. For example, if the current connection status is successful connection, the indicator may be controlled to display green light; and if the current connection status is failed connection, the indicator may be controlled to display red light.

Optionally, the 3D glasses may send the connection status information to the display apparatus via the wireless communication apparatus. After receiving the connection status information, the display apparatus may display the connection status information on a display of the display apparatus, to implement visualization of the connection status of the 3D glasses. For example, the display apparatus may display a pop-up window, and display the connection status of the 3D glasses in the pop-up window, or display connection status prompt information of the 3D glasses in a local area (for example, a lower-right-corner area) of a display interface, for example, prompt information in a text form or prompt information in an image/icon form. This is not limited in embodiments of this application.

### Example 2

3D glasses may send, to a display apparatus via a wireless communication apparatus, battery level information detected by the 3D glasses. The display apparatus may perform corresponding processing based on the battery level information sent by the 3D glasses.

The battery level information of the 3D glasses includes, for example, a percentage of used power or a percentage of remaining power. The 3D glasses may detect a battery level according to a specified periodicity, and send the detected battery level information to the display apparatus via the wireless communication apparatus; or when a battery level is lower than a specified threshold, send the battery level information to the display apparatus via the wireless communication apparatus.

The battery level information of the 3D glasses may be detected by a detection unit in the 3D glasses. The detection unit may be a software functional module. The software functional module may obtain a current battery level by invoking an application programming interface for querying a battery level.

Optionally, the 3D glasses may send the detected battery level information to the display apparatus via the wireless communication apparatus. After receiving the battery level information, the display apparatus may display the battery level information on a display of the display apparatus, to implement visualization of the battery level of the 3D glasses. For example, the display apparatus may display a pop-up window, and display the battery level of the 3D glasses in the pop-up window, or display the battery level of the 3D glasses in a local area (for example, a lower-right-corner area) of a display interface. Alternatively, after receiving the battery level information, the display apparatus may determine whether the battery level of the 3D glasses is lower than the specified threshold; and if the battery level is lower than the specified threshold, display the battery level information on a display, or display prompt information for prompting that the battery level is low.

In another possible implementation, status information includes connection status information of the 3D glasses and battery level information of the 3D glasses. The 3D glasses may send the connection status information and the battery level information to the display apparatus via the wireless communication apparatus. After receiving the connection status information and the battery level information of the 3D glasses, the display apparatus may display a pop-up window on the display of the display apparatus, and display the connection status information and the battery level information of the 3D glasses in the pop-up window.

In another possible implementation, this embodiment of this application further supports active query of the battery level of the 3D glasses by using a menu bar displayed on a screen of the display apparatus. For example, the menu bar may be displayed on the screen of the display apparatus, and the menu bar may include an option for querying the battery level of the 3D glasses. After the option is triggered, the display apparatus may send a query request (or referred to as a query instruction) for querying the battery level of the 3D glasses. The query request is sent to the 3D glasses via the wireless communication apparatus. A control unit in the 3D glasses may obtain battery level information by using the detection unit based on the query request, and send the battery level information to the display apparatus via the wireless communication apparatus.

There may be a plurality of manners of triggering the option that is in the menu bar on the screen of the display apparatus and that is used to query the battery level of the 3D glasses. For example, this embodiment of this application may support a voice manner or a touch manner. In another embodiment of this application, the 3D glasses may obtain directional positioning information in a manner such as eyeball tracking positioning detection and ultra-wideband (ultra-wideband, UWB), and send the directional positioning information to the display apparatus via the wireless communication apparatus. When determining, based on the directional positioning information, that the option that is in the menu bar and that is used to query the battery level of the 3D glasses is selected, the display apparatus sends a query request for querying the battery level of the 3D glasses.

### Example 3

3D glasses may send, to a display apparatus via a wireless communication apparatus, wearing status information detected by the 3D glasses. The display apparatus may perform corresponding processing based on the wearing status information sent by the 3D glasses.

A wearing status of the 3D glasses may include a state such as worn, taken-off, or the like. When the wearing status of the 3D glasses changes, for example, the 3D glasses are worn or taken off, the 3D glasses may detect a current wearing status, and send current wearing status information to the display apparatus via the wireless communication apparatus.

The wearing status information of the 3D glasses may be detected by a detection unit in the 3D glasses. The detection unit may be implemented by using a sensor, for example, may be implemented by using one sensor or one type of sensor, or may be implemented by using a combination of a plurality of sensors or a plurality of types of sensors, or may be implemented by using a sensor in a combination with software (that is, a sensor and a functional module). Optionally, the sensor may include at least one of or at least one type of the following sensors: an optical sensor (for example, an infrared light sensor) related to proximity detection, a capacitive sensor, a Hall sensor (for example, an open/closed status of the 3D glasses may be detected, to identify the wearing status of the 3D glasses), and the like.

In a possible implementation, the 3D glasses may send, to the display apparatus via the wireless communication apparatus, information detected by the sensor. The display apparatus may determine the wearing status of the 3D glasses based on received feedback information.

In another possible implementation, when the detection unit is implemented by using a sensor and a functional module, the functional module may determine the wearing status of the 3D glasses based on information detected by one or more sensors, and send the determined wearing status information to the display apparatus via the wireless communication apparatus.

After the display apparatus receives the wearing status information of the 3D glasses, in a possible implementation, the display apparatus may display the wearing status of the 3D glasses on a display of the display apparatus, for example, may display the wearing status of the 3D glasses in a pop-up window manner.

After the display apparatus receives the wearing status information of the 3D glasses, in another possible implementation, the display apparatus may control 3D video playing based on the wearing status of the 3D glasses. For example, if the received wearing status information indicates that the 3D glasses are taken off, the display apparatus may immediately stop 3D video playing, or switch from a 3D video mode to a 2D video mode. For another example, if the received wearing status information indicates that the 3D glasses are taken off, the display apparatus may stop 3D video playing after a specified duration, or switch from a 3D video mode to a 2D video mode. In comparison with immediately stopping 3D video playing or switching to the 2D video mode, an operation of stopping 3D video playing or switching to the 2D video mode is delayed for a period of time to avoid an invalid control operation caused because a wearer temporarily takes off the 3D glasses.

After the display apparatus receives the wearing status information of the 3D glasses, in another possible implementation, the display apparatus may send control information to the 3D glasses via the wireless communication apparatus, to control the 3D glasses to perform a corresponding operation. For example, if the received wearing status information indicates that the 3D glasses are taken off, the display apparatus may send the control information to the 3D glasses via the wireless communication apparatus, to indicate the 3D glasses to be off or in a sleep state, thereby reducing power consumption.

After the display apparatus receives the wearing status information of the 3D glasses, in another possible implementation, the display apparatus may collect statistics on a wearing duration of the 3D glasses. For example, after receiving the wearing status information indicating the "worn" state, the display apparatus may start a timer to collect statistics on the wearing duration. When the display apparatus determines that the wearing duration exceeds a specified threshold, the display apparatus may display health prompt information (for example, indicating that the wearing duration expires) on a screen of the display apparatus, and/or send control information to the 3D glasses via the wireless communication apparatus, so that the 3D glasses perform a corresponding operation. For example, when the display apparatus determines that the wearing duration exceeds the specified threshold and a current mode is a "child mode", the display apparatus may send the control information to the 3D glasses via the wireless communication apparatus, to indicate the 3D glasses to be off or in the sleep state.

Optionally, after detecting the wearing status, the 3D glasses may perform a corresponding operation based on the current wearing status. For example, if the current wearing status is "taken-off", the 3D glasses may be automatically off or in the sleep state. For another example, if the current wearing status is "worn", the 3D glasses may be automatically on or end the sleep state.

It may be understood that various processing operations performed by the display apparatus after the wearing status is obtained may be combined. This is not limited in this embodiment of this application. For example, after obtaining the wearing status of the 3D glasses: "taken-off", the display apparatus stops 3D video playing, and sends turn-off control information to the 3D glasses.

It may be understood that various processing operations performed by the display apparatus and the 3D glasses after the wearing status of the 3D glasses is obtained may be combined. This is not limited in this embodiment of this application. For example, after the 3D glasses detect the wearing status: "taken-off", the 3D glasses may be turned off after the wearing status information is sent, and the display apparatus stops 3D video playing after receiving the wearing status information.

### Example 4

3D glasses may send, to a display apparatus via a wireless communication apparatus, temperature information detected by the 3D glasses. The display apparatus may perform corresponding processing based on the temperature information sent by the 3D glasses.

The temperature information detected by the 3D glasses may include at least one of the following: a human body temperature of a wearer and a temperature of the 3D glasses (for example, a temperature of a processing module or a chip in the 3D glasses). The 3D glasses may perform temperature detection according to a specified periodicity, and send the detected temperature information to the display apparatus via the wireless communication apparatus, or when a detected temperature exceeds a specified threshold, send the detected temperature information to the display apparatus via the wireless communication apparatus.

The temperature information of the 3D glasses may be detected by a detection unit in the 3D glasses. The detection unit may be a temperature detection unit. For example, the detection unit may be a temperature sensor, or a negative temperature coefficient thermistor (negative temperature coefficient thermistor, NTC) discrete device circuit, or a combination of the foregoing components.

After the display apparatus receives the temperature information sent by the 3D glasses, in a possible implementation, the display apparatus may display the temperature information on a display of the display apparatus, or when a temperature indicated by the temperature information exceeds the specified threshold, display prompt information on a display of the display apparatus, to prompt that the temperature of the 3D glasses is excessively high.

After the display apparatus receives the temperature information sent by the 3D glasses, in another possible implementation, the display apparatus may determine, based on the temperature indicated by the temperature information, whether overheat protection needs to be performed on the 3D glasses. If overheat protection needs to be performed on the 3D glasses, the display apparatus may send the control information to the 3D glasses via the wireless communication apparatus, to trigger overheat protection for the 3D glasses.

After the 3D glasses detect the temperature information, in another possible implementation, a corresponding operation may be performed based on the current temperature. For example, if the current temperature exceeds the specified threshold, the 3D glasses may automatically perform overheat protection.

It may be understood that various processing operations performed by the display apparatus after the wearing status is obtained may be combined. This is not limited in this embodiment of this application. For example, after obtaining the temperature of the 3D glasses, the display apparatus displays the prompt information on the display of the 3D glasses, and sends, to the 3D glasses, the control information for performing overheat protection.

It may be understood that various processing operations performed by the display apparatus and the 3D glasses after the temperature of the 3D glasses is obtained may be combined. This is not limited in this embodiment of this application. For example, after detecting that the temperature is excessively high, the 3D glasses perform overheat protection, and send the temperature information to the display apparatus. After receiving the temperature information, the display apparatus displays the prompt information on the display of the display apparatus.

### Example 5

3D glasses may send, to a display apparatus via a wireless communication apparatus, user operation information detected by the 3D glasses. The display apparatus may perform corresponding processing based on the user operation information sent by the 3D glasses.

After detecting the user operation information, the 3D glasses may send the user operation information to the display apparatus via the wireless communication apparatus.

For example, the user operation information may include one or more of the following:
video mode switching information, for example, including switching operation information of switching from a 3D video mode to a 2D video mode, or switching operation information of switching from a 2D video mode to a 3D video mode;
playing control operation information, where a playing control operation may include: stopping playing, pausing playing, adjusting volume, one-click mute, and the like;
screenshot or screen capture operation information, for example, the operation information may include information related to an operation such as screen recording start, screen recording end, screenshot, favorites, and artificial intelligence (artificial intelligence, AI) image recognition during viewing;
screen-on or screen-off operation information; and
3D glasses turn-on operation information or turn-off operation information.

It may be understood that the foregoing merely lists several types of possible user operation information as examples. A user operation type and corresponding user operation information are not limited in this embodiment of this application.

In this embodiment of this application, the 3D glasses may detect the user operation information in a plurality of manners. For example, a physical button may be disposed on the 3D glasses, and the user operation information may be obtained by detecting an operation performed by a user on the physical button. For example, a video mode switching button is disposed on the 3D glasses, and switching between a 2D video mode and a 3D video mode may be performed by pressing the button. For another example, a capacitive touch component may be disposed on the 3D glasses, and the capacitive touch component may obtain the user operation information by detecting a touch operation of the user. For still another example, a component such as a sensor may be disposed on the 3D glasses, and an operation such as tapping or sliding of the user may be detected.

The user operation information may be detected by a detection unit in the 3D glasses. Based on the foregoing user operation, the detection unit may be implemented by using one or more components such as a physical button, a micro switch, and a sensor. For example, the sensor may include a touch sensor (touch sensor), a gravity sensor (g sensor), or the like.

Optionally, after receiving the user operation information sent by the 3D glasses, the display apparatus may perform corresponding processing based on the user operation information. For example, if the user operation information indicates switching from the 3D video mode to the 2D video mode, the display apparatus switches from the 3D video mode to the 2D video mode. For another example, if the user operation information indicates stopping playing, the display apparatus stops current video playing.

Optionally, after detecting the user operation information, the 3D glasses may perform a corresponding operation based on the user operation information. For example, if the user operation information indicates that the 3D glasses are turned off, or the 3D glasses are switched from the 3D video mode to the 2D video mode, the 3D glasses perform a turn-off operation.

It may be understood that various processing operations performed by the display apparatus after the user operation information is obtained may be combined. This is not limited in this embodiment of this application.

It may be understood that various processing operations performed by the display apparatus and the 3D glasses after the user operation information is obtained may be combined. This is not limited in this embodiment of this application. For example, after the 3D glasses detect switching from the 3D video mode to the 2D video mode, the 3D glasses send the user operation information to the display apparatus, and the 3D glasses are turned off. After receiving the user operation information, the display apparatus switches from the 3D video mode to the 2D video mode.

### Example 6

3D glasses may send, to a display apparatus via a wireless communication apparatus, position information detected by the 3D glasses. The display apparatus may perform corresponding processing based on the position information sent by the 3D glasses.

When a position of the 3D glasses changes, the detected position information may be sent to the display apparatus via the wireless communication apparatus, or position detection may be performed according to a specified periodicity, and the detected position information is sent to the display apparatus via the wireless communication apparatus.

Optionally, the position information may include one or more of the following information: height information, a distance to a screen of the display apparatus, and horizontal position information. For example, a wearer of the 3D glasses crouches down or stands up, causing height change. A difference between a head height when the wearer crouches down and a head height when the wearer stands up can be detected by the 3D glasses. The position information may be expressed as XYZ three-dimensional information. FIG. 5 shows an example of XYZ three-dimensional information of a position of the 3D glasses, where Z represents a distance between the position of the 3D glasses and a screen of the display apparatus, Y represents a height of the position of the 3D glasses, and X represents a position of the 3D glasses in a horizontal direction.

Optionally, the 3D glasses may quantize detected height information into corresponding posture information, and send the posture information to the display apparatus via the wireless communication apparatus. For example, a posture type may include crouch-down and stand-up. A correspondence between a height and a posture type may be preset. After detecting the height information, the 3D glasses may determine, based on the correspondence, a posture type corresponding to the height.

The position information of the 3D glasses may be detected by a detection unit in the 3D glasses. The detection unit may be a sensor configured to detect a position. The sensor may obtain the position information by using one of or a combination of the following ranging methods: a laser ranging method, a time of flight (time of flight, TOF) ranging method, an ultrasonic ranging method, an A+G ranging method, an infrared ranging method, and the like. Correspondingly, the detection unit may be implemented by using one or more sensors, or may be implemented by using one or more sensors, for example, may include a laser ranging sensor, an ultrasonic ranging sensor, and an infrared ranging sensor.

For example, the laser ranging method is used as an example. The laser ranging sensor may send a laser signal to the ground, receive a signal returned by the ground, and obtain, through measurement, a height from the 3D glasses to the ground based on a time difference between signal sending and receiving.

Optionally, after receiving the position information sent by the 3D glasses, the display apparatus may display a 3D video image based on the position information, so that the displayed 3D video image matches the position. For example, a processor (in other words, a 3D video application running in the processor, for example, a virtual reality application) in the display apparatus generates, based on the position information, an image that matches the position, and displays the image, so that a user can view, via the 3D glasses, the image adjusted based on the position of the 3D glasses. For example, when it is determined, based on the position information of the 3D glasses, that the wearer approaches the screen, an image visual range may be reduced, and viewing experience of drawing the image closer may be generated; and when it is determined, based on the position information of the 3D glasses, that the wearer leaves the screen, an image visual range may be increased, and viewing experience of pulling the image away may be generated. For another example, when it is determined, based on the position information of the 3D glasses, that the wearer crouches down, an image angle of view may be lowered, and look-straight or look-up viewing experience may be generated; and when it is determined, based on the position information of the 3D glasses, that the wearer stands up, an image angle of view may be elevated, and look-down viewing experience may be generated. For another example, when it is determined, based on the position information of the 3D glasses, that the wearer moves to a left side, the image angle of view may be changed and/or the image may be panned to display more content on the left side; and when it is determined, based on the position information of the 3D glasses, that the wearer moves to a right side, the image angle of view may be changed and/or the image may be panned to display more content on the right side, to achieve image-following-viewer viewing experience.

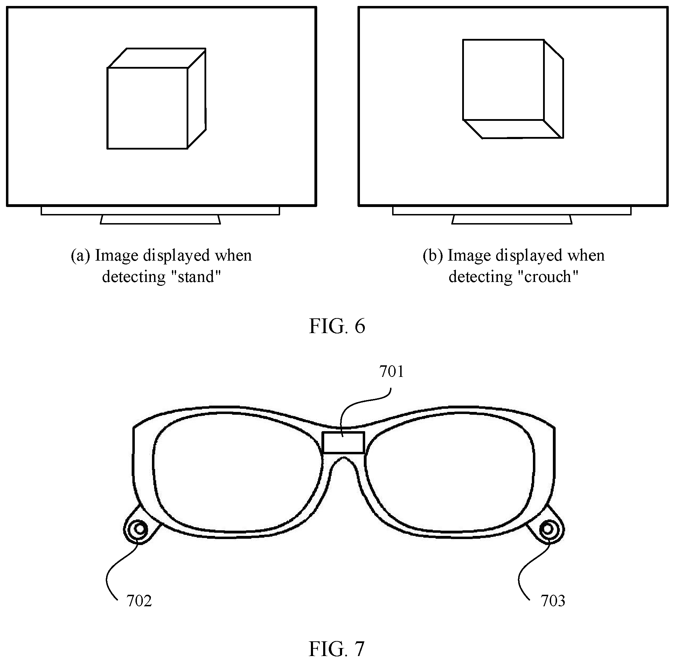

For example, the height information is used as an example. As shown in FIG. 6, when the user is in a stand-up posture, an object in an image viewed by the user by using the 3D glasses is shown in (a) in FIG. 6. After the user crouches down, the display apparatus may adjust the image based on height change of the head of the user, so that the object viewed by the user by using the 3D glasses is shown in (b) in FIG. 6.

Based on the foregoing implementation, when a posture of the user changes (for example, from crouch-down to stand-up, or from stand-up to crouch-down), the 3D image may change accordingly according to the posture change of the user, thereby improving viewing experience of the user.

Further, when only the height information is detected, the 3D image changes only with the height, and processing of a warping algorithm and a head motion tracking algorithm does not need to be performed on the image. Therefore, an image processing delay is low, and processing overheads and a resource requirement are low, thereby reducing a risk of frame freezing and improving viewing experience of the user.

The foregoing is merely several possible position detection methods. This is not limited in this embodiment of this application. For example, in another possible implementation, a plurality of signal transmitters (referred to as reference points) may be disposed in a room. Positions of these reference points are known to the 3D glasses or the display apparatus. Signals may be sent between the 3D glasses and the reference points. The 3D glasses are positioned based on a TOF method.

### Example 7

3D glasses may send, to a display apparatus via a wireless communication apparatus, position information detected by the 3D glasses. The display apparatus may determine an action posture of a wearer based on the position information sent by the 3D glasses and with reference to an image shot by a camera of the display apparatus, and perform corresponding processing based on the action posture of the wearer.

For a specific implementation in which the 3D glasses perform position detection and send the position information to the display apparatus, refer to the foregoing example.

After receiving the position information from the 3D glasses, the display apparatus may determine the action posture of the wearer of the 3D glasses with reference to the image captured by the camera of the display apparatus, for example, an AI camera, and perform corresponding processing based on the action posture of the wearer of the 3D glasses. For example, the image may be calibrated, or a prompt is provided when it is determined that the posture is incorrect.

A 3D game scenario is used as an example. The 3D glasses may send, to the display apparatus via a transceiver apparatus, the position information of the wearer of the 3D glasses before a game starts. The display apparatus may perform automatic calibration based on the position information, to ensure that an image matches a height of the wearer of the 3D glasses. In a process of playing the game, the 3D glasses may continuously send the position information of the 3D glasses to the display apparatus. The display apparatus may accurately determine the action posture of the wearer of the 3D glasses with reference to the image captured by the AI camera of the display apparatus, so that an image can be displayed based on the action posture of the wearer, thereby improving user experience. For example, if the display apparatus determines, based on the position information of the wearer of the 3D glasses, that the wearer is relatively close to a screen, and determines, based on the image captured by the AI camera, that the wearer is currently in a sitting posture, an image visual range may be reduced, and an angle of view may be adjusted to adapt to the current position and the posture of the wearer.

Optionally, when determining that the action posture (for example, the sitting posture) of the wearer of the 3D glasses is incorrect, the display apparatus may further provide a corresponding prompt, for example, may display prompt information on the screen, or perform voice broadcasting.

### Example 8

3D glasses may perform position detection and eyeball tracking detection to obtain position information and eyeball tracking information of the 3D glasses, and send the position information and the eyeball tracking information to a display apparatus via a wireless communication apparatus. The display apparatus may perform corresponding processing based on the position information and the eyeball tracking information that are sent by the 3D glasses.

For a specific implementation in which the 3D glasses perform position detection and send the position information to the display apparatus, refer to the foregoing example.

The position information and the eyeball tracking detection of the 3D glasses may be detected by a detection unit in the 3D glasses. Optionally, the detection unit may include a position detection unit and an eyeball tracking detection unit. For a specific implementation of the position detection unit, refer to the foregoing embodiment. The eyeball tracking detection unit may be configured to detect eyeball motion of a left eye and/or a right eye. Optionally, the eyeball tracking detection unit may include one or more of the following devices: an infrared sensor and a camera.

For example, FIG. 7 shows 3D glasses having a position detection function and an eyeball tracking detection function. As shown in FIG. 7, a position detection unit 701 is disposed in a middle position between two lenses of the 3D glasses. For example, the position detection unit may be an infrared ranging sensor, and may separately transmit an infrared signal in at least one direction of front (a direction toward a screen of a display apparatus), bottom (a direction toward the ground), and side (a direction toward a wall), receive a returned infrared signal, and determine a distance in the foregoing direction based on a time difference between sending and receiving, to obtain position information. A first eyeball tracking detection unit 702 and a second eyeball tracking detection unit 703 are respectively disposed around positions of the two lenses of the 3D glasses, and are respectively configured to detect eyeball motion of a left eye and a right eye. The first eyeball tracking detection unit 702 and the second eyeball tracking detection unit 703 may be implemented by using an infrared sensor and/or a camera.

The 3D glasses may send, to the display apparatus via the wireless communication apparatus, information detected by the position detection unit 701 and information detected by the first eyeball tracking detection unit 702 and the second eyeball tracking detection unit 703. The display apparatus may determine the position information of the 3D glasses based on the information detected by the position detection unit 701, determine eyeball tracking information of a wearer of the 3D glasses based on feedback information of the first eyeball tracking detection unit 702 and the second eyeball tracking detection unit 703, and determine a point-of-gaze position of a line of sight of the wearer on an image.

After the display apparatus obtains the point-of-gaze position of the line of sight of the wearer of the 3D glasses on the image, in a possible implementation, the display apparatus may display a 3D image based on a motion trajectory of point-of-gaze positions, to implement "image-following-eye" effect.

After the display apparatus obtains the point-of-gaze position of the line of sight of the wearer of the 3D glasses on the image, in another possible implementation, the display apparatus may trigger a menu function or a menu option of a corresponding area based on the point-of-gaze position, so that the menu function displayed on the screen of the display apparatus can be selected or controlled through pointing of a human eye.

In a possible implementation, after obtaining the position information from the 3D glasses, the display apparatus may display the 3D image based on the position information, so that the 3D image matches a position of the wearer of the 3D glasses. For example, when the wearer walks far away from or walks close to the screen of the display apparatus, the display apparatus may adjust a visual range of the 3D image (for example, the visual range is reduced when the wearer walks close to the screen, and the visual range may be increased when the wearer walks far away from the screen). In this case, the display apparatus may first determine the visible range based on the position information, and then determine the point-of-gaze position in the visible range based on the eyeball tracking information.

### Example 9

3D glasses cooperate with a display apparatus to detect a line-of-sight direction, and send line-of-sight direction information to the display apparatus via a wireless communication apparatus. The display apparatus may perform corresponding processing based on the line-of-sight direction information sent by the 3D glasses.

In this embodiment of this application, the line-of-sight direction information may indicate a head action of a wearer of the 3D glasses. For example, the line-of-sight direction information may be obtained by detecting head turning of the wearer of the 3D glasses and position information of the 3D glasses (for example, including a distance to a screen of the display apparatus and/or a height of a position of the 3D glasses).

The line-of-sight direction information may be detected by a detection unit in the 3D glasses. Optionally, the detection unit may include at least two directional positioning detection units. The at least two directional positioning detection units may be disposed around a lens frame of the 3D glasses, for example, may be disposed on left and right sides of the lens frame to detect leftward or rightward head turning, or may be disposed on upper and lower sides of the lens frame to detect upward or downward head turning (for example, head lifting or head lowering).

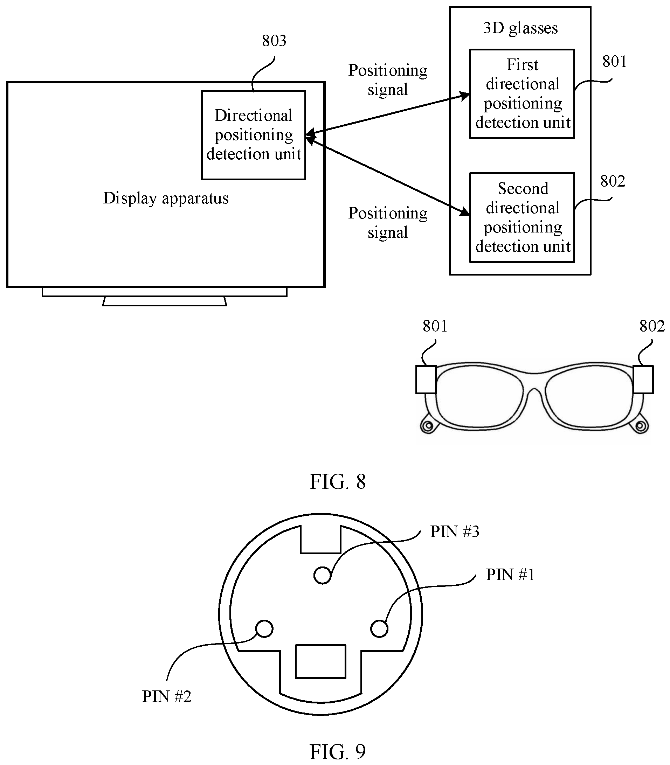

As shown in FIG. 8, for example, two directional positioning modules are used to detect leftward or rightward head turning, and the two directional positioning detection units are respectively a first directional positioning detection unit 801 and a second directional positioning detection unit 802. The first directional positioning detection unit 801 and the second directional positioning detection unit 802 are respectively located on two sides of the 3D glasses; and each may send a positioning signal to the display apparatus and receive a positioning signal sent by a directional positioning detection unit 803 in the display apparatus, and determine, based on a time difference between sending the positioning signal and receiving the positioning signal, a distance between the directional positioning detection unit and a screen of the display apparatus. After the head of the wearer of the 3D glasses turns leftward or rightward, a difference exists between the distance detected by the first directional positioning detection unit 801 and the distance detected by the second directional positioning detection unit 802. A turning angle may be calculated based on the distance difference and a distance between the 3D glasses and the display apparatus, and a change angle of a line of sight may be determined based on the turning angle.

In a possible implementation, the 3D glasses may send the determined distance difference or the calculated turning angle to the display apparatus via the wireless communication apparatus. In another possible implementation, the directional positioning detection unit 803 in the display apparatus may determine a distance difference between the directional positioning detection unit 803 and each of the first directional positioning detection unit 801 and the second directional positioning detection unit 802 based on a time difference between receiving the positioning signal and sending the positioning signal, may calculate a turning angle based on the distance difference and the distance between the 3D glasses and the display apparatus, and may determine the change angle of the line of sight based on the turning angle. In this way, the 3D glasses do not need to send feedback information to the display apparatus.

Optionally, the directional positioning detection units in the 3D glasses and the display apparatus may be implemented by using a directional positioning detection unit based on an ultra-wideband (ultra-wideband UWB) technology, to achieve sub-centimeter-level spatial precision and millisecond-level time precision.

After the display apparatus obtains line-of-sight direction information, in a possible implementation, the display apparatus may display a 3D image based on the line-of-sight direction information, to implement "image-following-eye" effect.

After the display apparatus obtains the line-of-sight direction information, in another possible implementation, the display apparatus may determine a point-of-gaze position of the line of sight on the screen based on the line-of-sight direction information, and trigger a menu function or a menu option of a corresponding area based on the point-of-gaze position, so that the menu function displayed on the screen of the display apparatus can be selected or controlled through motion of the head.

In the foregoing examples, for a transmission manner of information exchanged between the 3D glasses and the display apparatus, refer to the foregoing related content. Details are not described herein again.

The plurality of methods described in Example 1 to Example 9 may also be used in combination, to implement a more intelligent interaction function.

In a possible implementation, the intelligent interaction functions provided in Example 7 and Example 9 may be used in combination. To be specific, the detection unit in the 3D glasses may detect and obtain the position information and the line-of-sight direction information, and send the position information and the line-of-sight direction information to the display apparatus via the wireless communication apparatus, so that the display apparatus performs corresponding processing. For a specific implementation, refer to related content in Example 7 and Example 9. In this implementation, accurate detection of a height, a relative position, an action, and a posture can be implemented. In scenarios such as a 3D game and a motion sensing game, higher-precision detection can be implemented, and more complex game action interaction can be completed, thereby improving user experience.

In another possible implementation, the intelligent interaction functions provided in Example 7, Example 8, and Example 9 may be used in combination. To be specific, the detection unit in the 3D glasses may detect and obtain the position information, the eyeball tracking information, and the line-of-sight direction information, and send the position information, the eyeball tracking information, and the line-of-sight direction information to the display apparatus via the wireless communication apparatus, so that the display apparatus performs corresponding processing. For a specific implementation, refer to related content in Example 7, Example 8, and Example 9. In this implementation, detection in a plurality of dimensions such as XYZ space three-dimensional detection, head motion detection, and eyeball line-of-sight tracking detection can be implemented. Based on the detection in these dimensions, a sense of experience of a 3D augmented reality (augmented reality, AR)/virtual reality (virtual reality, VR) game can be implemented on the display apparatus. A displayed image may be determined based on data in the plurality of dimensions based on a height of a user, a body position/body motion trajectory, a head position/head motion trajectory, an eyeball position/eye vision trajectory, and the like, and then is adjusted in real time with a sense of space, to improve user experience.

Based on the communication system shown in FIG. 1, to support bidirectional communication between the communication apparatus 110 and the electronic device 130, in some embodiments of this application, a first communication interface and a second communication interface are disposed on the communication apparatus 110. The first communication interface may send synchronization information, and the second communication interface may receive feedback information from the electronic device 130.

In addition, in a related technology in a 3D display application scenario, a dedicated interface (3D SYNC interface) is disposed on the display device to output a 3D synchronization signal, and a signal transmitter may be connected to the dedicated interface through a cable, so that the signal transmitter can convert the 3D synchronization signal output by the dedicated interface into an infrared signal or a Bluetooth signal for transmission. An example of the 3D SYNC interface may be shown in FIG. 9. The 3D SYNC interface includes three pins (pins). A pin #1 is a 5-volt direct current power supply (+5 Volt DC power out) pin, and the pin can supply power to the signal transmitter. A pin #2 is a ground (ground) pin. A pin #3 is a 3D SYNC signal output pin.

The 3D SYNC interface is specially disposed on the display device to output the 3D synchronization signal. This causes a space waste of a control circuit of the display device and increases production costs of the display device. In addition, the 3D SYNC interface supports only unidirectional transmission.

Further, to resolve the foregoing problem, in some embodiments of this application, a dedicated interface for outputting the 3D synchronization information does not need to be disposed on the display apparatus, but the wireless communication apparatus may be connected via a normalized universal interface of the display apparatus, to output the 3D synchronization information to the wireless communication apparatus. The wireless communication apparatus converts the 3D synchronization information into a wireless signal and transmits the wireless signal, to control the 3D glasses.

The following uses a 3D display scenario as an example to describe in detail a structure of a related apparatus in embodiments of this application with reference to the accompanying drawings.

With reference to the 3D display application scenario shown in FIG. 2, the first communication interface 2101 and the second communication interface 2102 in the display apparatus 210 belong to communication interfaces of a same type and support a same communication protocol. The first communication interface 2101 and the second communication interface 2102 structurally match the first communication interface 2201 in the wireless communication apparatus 220. The first communication interface 2101 and the second communication interface 2102 may be connected to the first communication interface 2201 through a cable, or may be directly connected to the first communication interface 2201 to reduce cable costs.

In a possible implementation, the first communication interface 2101 and the second communication interface 2102 in the display apparatus 210 may be a part of pins in a normalized universal communication interface disposed on the display apparatus 210. The normalized universal communication interface on the display apparatus is reused to connect to the wireless communication apparatus 220, to output 3D synchronization information. In comparison with a manner of using a dedicated interface to transmit 3D synchronization information, this can save a communication interface, which facilitates space stacking and normalization design of the display apparatus, thereby reducing costs.

For example, the universal communication interface may be a universal serial bus (universal serial bus, USB) interface, for example, may be a USB Type-A interface, a USB Type-B interface, a USB Type-C interface, or an evolved USB interface. This is not limited in embodiments of this application. Correspondingly, the first communication interface 2201 in the wireless communication apparatus 220 is a USB interface that matches the USB interface on the display apparatus 210. Optionally, the USB interface on the display apparatus 210 may be a female connector, and the USB interface on the wireless communication apparatus 220 may be a male connector, so that the wireless communication apparatus 220 can be directly connected to the display apparatus 210 through insertion.

For another example, the universal communication interface on the display apparatus 210 and the first communication interface 2201 on the wireless communication apparatus 220 may be network interfaces, for example, Ethernet interfaces, so that the wireless communication apparatus 220 can be connected to the display apparatus 210 through a network cable.

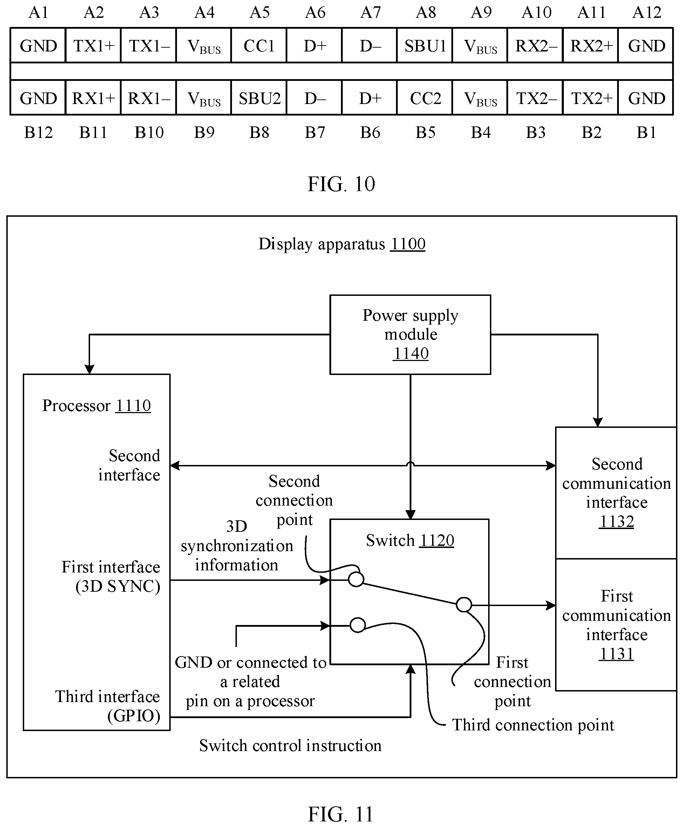

For example, an interface between the display apparatus and the wireless communication apparatus is a USB Type-C interface. FIG. 10 is a diagram of pins (pins) in a USB Type-C socket (female connector). The USB Type-C socket includes two rows of 24 pins in total. One row of pins is identified as A1 to A12, and the other row of pins is identified as B1 to B12. Each pin corresponds to a lane (lane). The 24 pins are respectively:
four power pins V_{BUS}: A4, A9, B4, and B9 in the figure;
four ground pins GND: A1, A12, B1, and B12 in the figure; and
two pairs of pins D+/D-, four pins in total, for USB 2 data transmission: A6, A7, B6, and B7 in the figure. Each pair of D+/D- corresponds to one data channel, and D+ and D- are used to transmit a pair of differential signals.

There are four pairs of pins TXx+/TXx-, eight pins in total, for USB 3 data transmission and data transmission of display data (display data, DP): A2, A3, A10, A11, B2, B3, B10 and B11 in the figure. Each pair of TXx+/TXx- corresponds to one data channel, and TX+ and TX- are used to transmit a pair of differential signals. USB 3 data transmission and DP data transmission share the four pairs of pins.

Two configuration channel (configuration channel, CC) pins (CC1 and CC2) are A5 and B5 shown in the figure. The CC pin (or the CC channel) is used to confirm a transmission direction and an insertion direction in a USB Type-C connection process, and transmit a USB PD BCM code signal, to implement load function configuration.

Two USB Type-C extended pins (SBU 1 and SBU 2) are A8 and B8 shown in the figure. SBU 1 and SBU 2 are transmission channels of auxiliary signals and have different functions in different application scenarios.

Based on the USB Type-C interface shown in FIG. 10, in this embodiment of this application, the first communication interface 2101 in the display apparatus 210 may be implemented by using an idle pin in the USB Type-C interface. For example, the idle pin may be an isolated ground (GND) pin used to transmit USB differential signals (for example, differential signals D+/D- or differential signals TX1+/TX1-). The second communication interface 2102 in the display apparatus 210 may be implemented by using a pin that is in the USB Type-C interface and that is configured to implement a bidirectional data transmission function, for example, pins D+/D- (for example, A6, A7, B6, and B7 in FIG. 10) corresponding to a USB 2 data transmission channel in the USB Type-C interface, to implement a bidirectional data transmission function based on the USB 2 protocol; and for another example, pins TX1+/TX1- (for example, A2, A3, A10, A11, B2, B3, B10, and B11 in FIG. 10) corresponding to a USB 3 data transmission channel in the USB Type-C interface, to implement a bidirectional data transmission function based on the USB 3 protocol.

To implement the functions of the apparatuses in the system architecture shown in FIG. 1, FIG. 2, or FIG. 3, embodiments of this application provide possible structures of a communication apparatus (for example, a display apparatus), a wireless communication apparatus, and an electronic device (for example, 3D glasses). The following uses the display apparatus, the wireless communication apparatus, and the 3D glasses in the 3D display scenario provided in embodiments of this application as an example to describe a structure of a related apparatus with reference to the accompanying drawings.

FIG. 11 is a diagram of a structure of a display apparatus according to an embodiment of this application.

As shown in FIG. 11, the display apparatus 1100 includes a processor 1110, a switch 1120, a first communication interface 1131, and a second communication interface 1132. Further, a power supply module 1140 may be further included. It may be understood that the display apparatus 1100 may further include more modules. This is not limited in this embodiment of this application.

A first interface is disposed on the processor 1110. The first interface is configured to output 3D synchronization information (3D SYNC). The first interface is connected to a second connection point in the switch 1120. After the switch 1120 connects the second connection point and a first connection point under control of the processor 1110, 3D synchronization information output by the first interface of the processor 1110 may be sent, via the first communication interface 1131, to a wireless communication apparatus connected to the display apparatus 1100.

Optionally, the first communication interface 1131 and the second communication interface 1132 may be implemented by at least one pin of a universal communication interface (such as a USB interface) disposed on the display apparatus 1100. A USB interface is used as an example. The first connection point in the switch 1120 may be connected to an idle pin of the USB interface. In other words, 3D synchronization information may be sent via the idle pin of the USB interface.

Optionally, a second interface is further disposed on the processor 1110, and the second interface is connected to the second communication interface 1132. The second interface has a bidirectional transmission function. Feedback information from 3D glasses may be transmitted to the processor 1110 via the second communication interface 1132 and the second interface. Further, control information sent by the processor 1110 to the 3D glasses may be sent, via the second interface and the second communication interface 1132, to the wireless communication apparatus connected to the display apparatus 1100. The second interface may include one or more pins that are connected to one or more pins in the second communication interface 1132 (a pin connected to the switch 1120 is excluded).

The second interface may be a physical layer interface (briefly referred to as a physical interface), and is configured to perform physical layer signal conversion, in other words, may convert (or process) to-be-sent data or control information into a physical layer signal and send the physical layer signal to the second communication interface 1132, or convert (or process) a physical layer signal from the second communication interface 1132 into data that can be processed by an upper-layer data processing unit.

Optionally, a third interface may be further disposed on the processor 1110. The processor 1110 may output a control instruction to the switch 1120 via the third interface, to control the switch 1120 to connect the first interface and the first communication interface 1131, for example, connect the second connection point and the first connection point in the switch 1120. For example, the third interface may be a general-purpose input/output (general-purpose input/output, GPIO) interface on the processor 1110.

Optionally, the switch 1120 further includes a third connection point. The third connection point is used to be grounded (GND); or according to a communication protocol, the third connection point may be connected to a related pin on the processor 1110. Optionally, by default, the switch 1120 connects the third connection point and the first connection point. After receiving a control instruction that is output by the processor 1110 and that is used to connect a 3D synchronization information output channel, the switch 1120 performs connection switching, that is, disconnects the third connection point from the first connection point and connects the second connection point and the first connection point.

Optionally, at least one of the processor 1110, the switch 1120, the first communication interface 1131, and the second communication interface 1132 may be powered by the power supply module 1140.

Optionally, the second communication interface 1132 may be further used as a power supply end to supply power to a wireless communication apparatus connected to the interface. Correspondingly, the second communication interface 1132 may include a pin used for power supply, and the power supply module 1140 may supply power to the pin, to supply power to an external wireless communication apparatus.

Based on FIG. 11, in a possible implementation, the processor 1110 may be a main processor, for example, a central processing unit (central processing unit, CPU).

Based on FIG. 11, in a possible implementation, the switch 1120 may be a single-pole double-throw (single-pole double-throw, SPDT) switch shown in FIG. 11, or may be an analog switch, or may be a discrete switch, or the like. This is not limited in this embodiment of this application. It may be understood that a structure of the switch shown in FIG. 11 is merely a diagram of a logical function structure of the switch, and does not constitute a limitation on a physical structure of the switch.

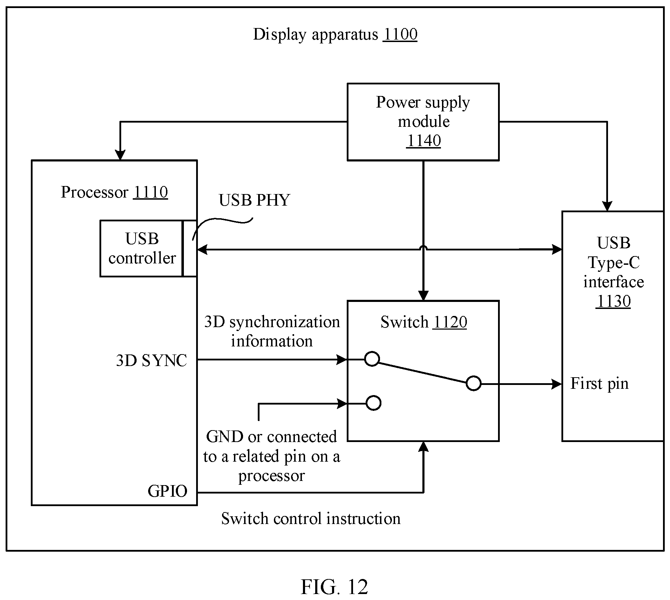

Based on the structure of the display apparatus shown in FIG. 11, FIG. 12 describes a structure of the display apparatus by using an example in which the first communication interface 1131 and the second communication interface 1132 are implemented by using USB Type-C interfaces. For a possible structure of the USB Type-C interface, refer to FIG. 10.

As shown in FIG. 12, the switch 1120 may connect a 3D SYNC interface on the processor 1110 to a first pin in a USB Type-C interface 1130, to transmit 3D synchronization information. For example, the first pin may be an isolated ground (GND) pin configured to transmit USB differential signals (for example, differential signals D+/D- or differential signals TX1+/TX1-). Another pin in the USB Type-C interface 1130 may be connected to a USB physical interface (USB PHY) integrated on the processor 1110. For example, the USB PHY is connected to pins D+/D- (for example, A6, A7, B6, and B7 in FIG. 6) corresponding to the USB 2 data transmission channel in the USB Type-C interface 1130, to implement the bidirectional data transmission function based on the USB 2 protocol. For another example, the USB PHY is connected to pins TX1+/TX1- (for example, A2, A3, A10, A11, B2, B3, B10, and B11 in FIG. 6) corresponding to the USB 3 data transmission channel in the USB Type-C interface 1130, to implement the bidirectional data transmission function based on the USB 3 protocol. In addition, the power supply module 1140 may supply power to a power pin V_{BUS} in the USB Type-C interface 1130.

The USB PHY is configured to perform physical layer electrical signal conversion. For example, the USB PHY receives differential signals D+/D- from the USB Type-C interface 1130, and decodes the differential signals, to provide decoded data for a USB controller integrated in the processor 1110 for processing. For another example, the USB PHY encodes data from a USB controller to obtain differential signals D+/D-, and outputs the differential signals to corresponding pins in the USB Type-C interface 1130.

Optionally, if the processor 1110 (or the USB controller in the processor 1110) is not integrated with the USB PHY, but is connected to the USB Type-C interface 1130 through external USB PHY, a pin in the USB Type-C interface 1130 other than a pin configured to transmit 3D synchronization information may be connected to a corresponding pin of the external USB PHY.

The USB Type-C interface 1130 may be a USB Type-C socket (that is, a female connector of the USB interface). Correspondingly, the first communication interface of the wireless communication apparatus may be a USB Type-C plug (that is, a male connector of the USB interface). In this way, direct connection is implemented through the USB male connector and the USB female connector, to save an external cable, reduce costs, and implement simple and beautiful overall effect.

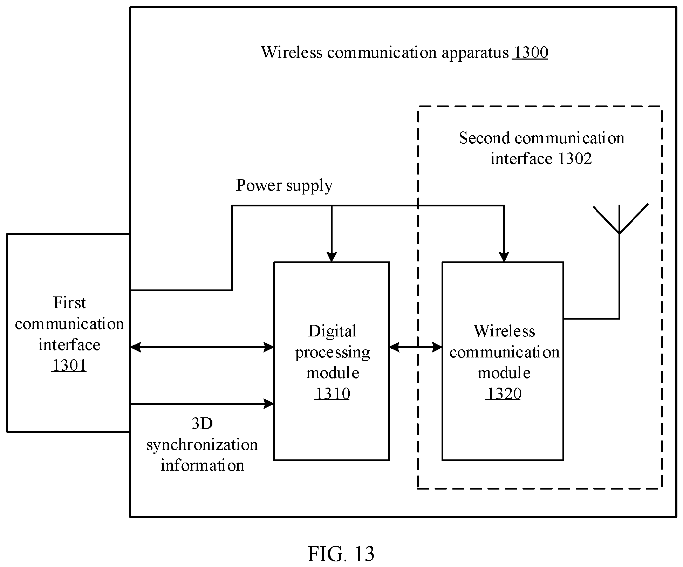

FIG. 13 is a diagram of a structure of a wireless communication apparatus according to an embodiment of this application.

As shown in FIG. 13, the wireless communication apparatus 1300 includes a first communication interface 1301, a digital processing module 1310, and a second communication interface 1302. Optionally, the second communication interface 1302 may include a wireless communication module 1320 and an antenna.

The first communication interface 1301 is configured to connect to a display apparatus, receive 3D synchronization information from the display apparatus, and send feedback information to the display apparatus. The digital processing module 1310 may encode the 3D synchronization information. The second communication interface 1302 may modulate the encoded 3D synchronization information into a first wireless signal, send the first wireless signal, and receive and demodulate a second wireless signal from 3D glasses. The digital processing module 1310 may further decode demodulated information, to obtain feedback information sent by the 3D glasses.

Optionally, the first communication interface 1301 may further receive control information from the display apparatus, the digital processing module 1310 encodes the control information, and the second communication interface 1302 modulates the encoded control information into a third wireless signal and sends the third wireless signal.

For example, the first communication interface 1301 is a USB Type-C interface. A pin in the first communication interface 1301 corresponds to a pin that is in a USB Type-C interface of the display apparatus and that is used to transmit the 3D synchronization information. After receiving a physical layer signal of the 3D synchronization information, the matching pin in the first communication interface 1301 performs physical layer signal conversion, and then sends a converted signal to the digital processing module 1310. The digital processing module 1310 may perform processing such as encoding on the signal, and send a processed signal to the wireless communication module 1320. The wireless communication module 1320 may modulate the signal according to a communication protocol with the 3D glasses, and broadcast a modulated first wireless signal via the antenna.

Optionally, the antenna of the wireless communication apparatus 1300 may further receive the second wireless signal sent by the 3D glasses. The wireless communication module 1320 may demodulate the second wireless signal, and send demodulated data to the digital processing module 1310. The digital processing module 1310 may decode the data, and send the decoded feedback information to the display apparatus via the first communication interface 1301. Optionally, the feedback information is sent to the display apparatus via a pin that is in the first communication interface 1301 and that is configured to perform bidirectional transmission. For example, pins D+/D- corresponding to a USB 2 data transmission channel in the USB Type-C interface sends the feedback information to the display apparatus.

Optionally, the wireless communication apparatus 1300 may further receive, via the first communication interface 1301, the control information and/or data sent by the display apparatus. The control information and/or the data are/is processed by the digital processing module 1310 and the wireless communication module 1320 to obtain the third wireless signal. The third wireless signal is broadcast via the antenna, so that the 3D glasses receive the third wireless signal.

Optionally, the first communication interface 1301, as a power-receiving end, may receive power supply from a power supply pin in a second communication interface of the display apparatus, and supply power to at least one of the digital processing module 1310 and the wireless communication module 1320.

In some other embodiments of this application, a first communication interface and the second communication interface on the display apparatus have a wireless communication capability, and can implement a signal conversion function of the wireless communication apparatus. In other words, the first communication interface in the display apparatus may convert synchronization information into a first wireless signal, and send the first wireless signal; and the second communication interface in the display apparatus may receive a second wireless signal from the electronic device, convert the second wireless signal into feedback information, and provide the feedback information to a processor. Correspondingly, to implement the signal conversion function, in a possible implementation, the wireless communication apparatus shown in FIG. 13 may be integrated into the display apparatus shown in FIG. 11 or FIG. 12. For example, the wireless communication apparatus is fastened to the first communication interface and the second communication interface of the display apparatus. The USB Type-C interface is used as an example. The USB Type-C interface of the display apparatus is fixedly connected to the USB Type-C interface of the wireless communication apparatus through insertion, so that functions of the wireless communication apparatus are integrated into the display apparatus. In another possible implementation, the first communication interface in the display apparatus has a signal modulation function, and has a wireless signal sending function. For example, the first communication interface includes a signal transmitter and an antenna, and the first communication interface may directly modulate synchronization information from the processor into a first wireless signal and transmit the first wireless signal. Similarly, the second communication interface has a signal modulation/demodulation function, and has a wireless signal sending/receiving function.

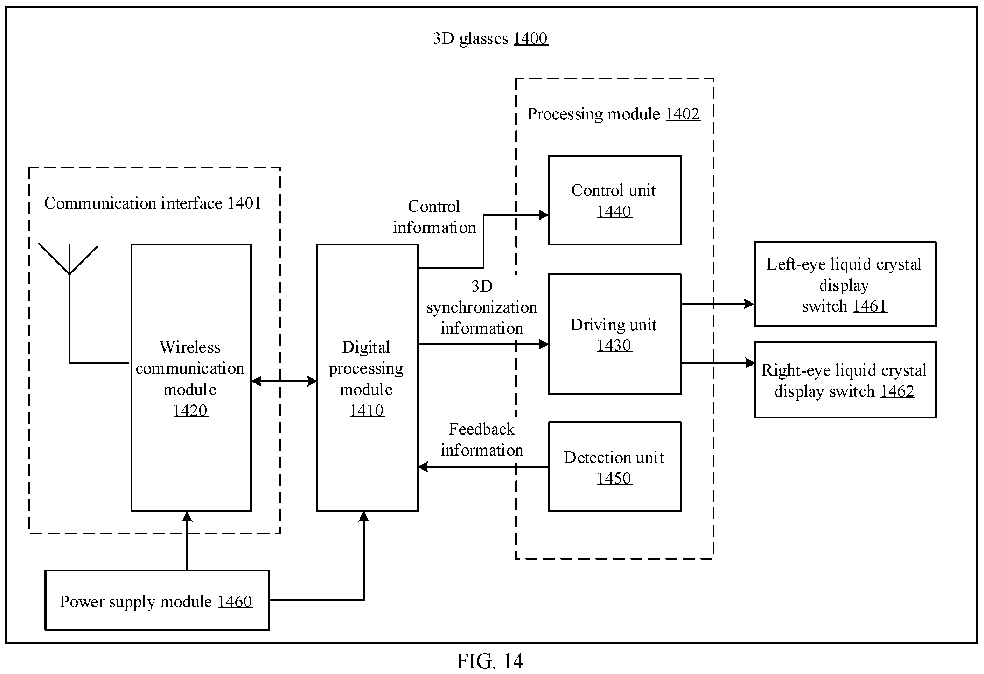

FIG. 14 is a diagram of a structure of 3D glasses according to an embodiment of this application.

As shown in FIG. 14, the 3D glasses 1400 include a communication interface 1401, a digital processing module 1410, and a processing module 1402, and further include a left-eye liquid crystal display switch 1461 and a right-eye liquid crystal display switch 1462.

Optionally, the communication interface 1401 may include a wireless communication module 1420 and an antenna.

The processing module 1402 may provide various system functions, a main control function, and the like. For example, the processing module 1402 may distribute information processed by the digital processing module 1410 to a corresponding processing unit for further processing, and may further send detected feedback information to the digital processing module for processing such as encoding. Optionally, a processing unit in the processing module 1402 may include a driving unit 1430 and a detection unit 1450, and may further include a control unit 1440.

Based on the structure shown in FIG. 14, after the antenna of the 3D glasses 1400 receives a first wireless signal, the wireless communication module 1420 demodulates the first wireless signal, and sends demodulated data to the digital processing module 1410. The digital processing module 1410 decodes the data to obtain 3D synchronization information, and sends the 3D synchronization information to the processing module 1402. A main control unit (not shown in the figure) in the processing module 1402 sends the 3D synchronization information to the driving unit 1430. The driving unit 1430 controls the left-eye liquid crystal display switch 1461 and the right-eye liquid crystal display switch 1462 based on the 3D synchronization information.

Optionally, the detection unit 1450 may send feedback information to the digital processing module 1410. The digital processing module 1410 encodes the feedback information, and sends the encoded data to the wireless communication module 1420. The wireless communication module 1420 modulates the data, and sends a modulated second wireless signal via the antenna.

Optionally, the antenna of the 3D glasses 1400 receives a third wireless signal. The wireless communication module 1420 demodulates the third wireless signal, and sends demodulated data to the digital processing module 1410. The digital processing module 1410 decodes the data to obtain control information and/or data from the display apparatus, and sends the control information and/or the data to the processing module 1402. The main control unit (not shown in the figure) in the processing module 1402 sends the control information and/or the data to the control unit 1440. The control unit 1440 may perform corresponding processing based on the control information and/or the data.

Optionally, the 3D glasses 1400 may further include a power supply module 1460. The power supply module 1460 may supply power to modules such as the digital processing module 1410 and the wireless communication module 1420.

Based on FIG. 14, in a possible implementation, the control unit 1440 may be implemented by using software, hardware, or a combination of software and hardware. For example, the control unit 1440 may be a microchip, and may control, based on the control information from the display apparatus, the 3D glasses to be off or in a sleep state. For a control operation of the control unit 1440, refer to the foregoing detailed description.

Based on FIG. 14, in a possible implementation, the detection unit 1450 may be implemented by using software, hardware, or a combination of software and hardware. For example, the detection unit 1450 may be a functional module implemented by using software. The functional module may detect a battery level of the 3D glasses, for example, obtain the battery level by invoking an interface for obtaining the battery level. The functional module may further obtain a connection status of the 3D glasses, for example, obtain the connection status of the 3D glasses by invoking an interface for obtaining the connection status. For another example, the detection unit 1450 may be implemented by using one or more sensors. Different types of information may be detected by using different types of sensors, to send detected feedback information to the display apparatus, thereby forming closed-loop interaction. For a type of the detection unit and a type of the feedback information, refer to the following detailed description.

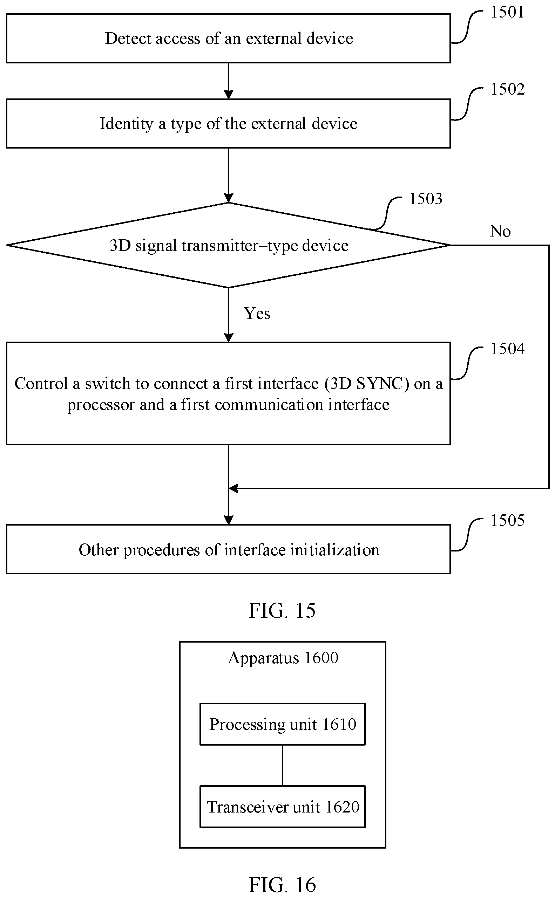

In some embodiments of this application, after the wireless communication apparatus is connected to the display apparatus, a communication interface initialization process is performed. In this process, the display apparatus may obtain a device type of the wireless communication apparatus, and determine access of the wireless communication apparatus based on the device type, and may control an internal switch of the display apparatus to connect an output channel of 3D synchronization information, to send the 3D synchronization information to the 3D glasses via the wireless communication apparatus. FIG. 15 is a diagram of an example of the foregoing switch control procedure.

The method provided in embodiments of this application is described by using a display apparatus and a wireless communication apparatus as examples. It should be understood that the display apparatus in embodiments of this application may be a display device, or a chip, a unit, or a module in the display device. For example, the display apparatus may be the display apparatus 1100 in FIG. 11 or FIG. 12. Alternatively, the display apparatus may be a communication apparatus having functions of a display device, or a chip, a unit, or a module inside a communication apparatus having functions of a display device. The wireless communication apparatus in embodiments of this application may be a signal transceiver, or a chip, a unit, or a module in a signal transceiver.

FIG. 15 is the diagram of the switch control procedure according to an embodiment of this application. The procedure is executed by a display apparatus.

As shown in FIG. 15, the procedure may include the following steps.

Step 1501: The display apparatus detects access of an external device.

In a possible case, after the external device is connected to the display apparatus, a voltage of one or more pins in a first communication interface and/or a second communication interface of the display apparatus changes. Therefore, it may be determined access of the external device based on the voltage change.

A USB Type-C interface is used as an example. After a USB Type-C interface of the display apparatus is connected to a USB Type-C interface of the external device, the display apparatus may determine access of the external device by detecting voltage change of a CC1/CC2 pin in the USB Type-C interface of the display apparatus.

Step 1502: The display apparatus identifies a type of the external device.

After detecting access of the external device, the display apparatus may perform an interface initialization procedure. In the interface initialization procedure, the display apparatus may obtain related information of the external device, so that the display apparatus can determine the type of the external device.

A USB Type-C interface is used as an example. In a device enumeration phase in the interface initialization procedure, the external device may send a device descriptor of the external device to the display apparatus via pins D+/D- corresponding to a USB 2 data transmission channel in a USB Type-C interface. The descriptor may include information such as a vendor identifier, a product identifier, and a category code of the device. The display apparatus may determine a type of the external device based on the device descriptor of the external device.

Step 1503: If the display apparatus determines that the external device is a device of a 3D signal transmitter type, the procedure proceeds to step 1504; or otherwise, the procedure proceeds to step 1505.

Step 1504: A processor in the display apparatus controls a switch to connect a first interface (3D SYNC) on the processor in the display apparatus to a first communication interface.

For a specific implementation of this step, refer to the foregoing embodiment. Details are not described herein again.

Further, after step 1504, or before step 1504, or when step 1504 is performed, step 1505 may be performed to perform other processes in interface initialization.

Step 1505: Perform the other processes in interface initialization.

For example, the processor in the display apparatus may allocate a resource to (for example, set an address for) an accessing external device. For another example, if the external device is the device of the 3D signal transmitter type, the processor in the display apparatus may switch to a 3D video mode.

For example, the wireless communication apparatus in this embodiment of this application accesses the display apparatus. After interface initialization is completed, a wired bidirectional communication link may be established between the display apparatus and the wireless communication apparatus, and a wireless bidirectional communication link may be further established between the wireless communication apparatus and the 3D glasses. A specific implementation of the communication link establishment process is not limited in this embodiment of this application.

Then, information may be transmitted between the display apparatus, the wireless communication apparatus, and the 3D glasses via an established communication link, to implement the display method provided in embodiments of this application.

In some other embodiments of this application, the display apparatus has a signal conversion function of the wireless communication apparatus. To be specific, the display apparatus may convert 3D synchronization information into a first wireless signal, send the first wireless signal, receive a second wireless signal, and further convert control information into a third wireless signal, and send the third wireless signal. In other words, the display apparatus does not need to be connected to the wireless communication apparatus. Correspondingly, the processor in the display apparatus may control the switch to connect the first interface (3D SYNC) on the processor in the display apparatus and the first communication interface in the following cases.

Case 1: The display apparatus receives feedback information from the 3D glasses, where the feedback information indicates to start 3D video playing. For example, the feedback information may be user operation information generated when a user triggers a button of the 3D video mode on the 3D glasses. For another example, the feedback information may be user operation information of opening or wearing the 3D glasses by the user.

Case 2: The display apparatus receives information about a related operation performed by the user on the display apparatus, where the information is used to request to start 3D video playing. For example, the user may request to play a 3D video by using a voice instruction or an instruction sent by a remote control, and the display apparatus may control, based on the instruction, a switch to connect the first interface (3D SYNC) on the processor in the display apparatus and the first communication interface.

It may be understood that the foregoing merely lists several cases that may trigger the processor of the display apparatus to control the switch to connect the first interface (3D SYNC) on the processor and the first communication interface. This is not limited in this embodiment of this application.

FIG. 16 is a diagram of a possible structure of an apparatus according to an embodiment of this application. The apparatus may be configured to implement the functions of the display apparatus, the wireless communication apparatus, or the 3D glasses in the foregoing method embodiments, and therefore can also implement beneficial effects of the foregoing method embodiments.

As shown in FIG. 16, the apparatus 1600 includes a processing unit 1610 and a transceiver unit 1620. The apparatus 1600 is configured to implement the functions of the related apparatus in the foregoing method embodiment.

Optionally, the transceiver unit 1620 may include a receiving unit and a sending unit. The receiving unit may receive information, for example, signaling or data. The sending unit may send information under control of a processing unit, for example, send signaling or data.

In a possible implementation, the apparatus 1600 is configured to implement the functions of the display apparatus in the foregoing embodiment. When identifying that a first communication interface (which may be implemented by using the transceiver unit 1620) is connected to a wireless communication apparatus, the processing unit 1610 controls a switch to connect a first interface to the first communication interface, and outputs 3D synchronization information by using the first communication interface.

In another possible implementation, the apparatus 1600 is configured to implement the functions of the display apparatus in the foregoing embodiment. The processing unit 1610 sends synchronization information via the transceiver unit 1620. The synchronization information is used to control the electronic device to perform a processing operation based on the synchronization information, so that the processing operation of the electronic device keeps synchronous with a processing operation of a communication apparatus. The transceiver unit 1620 receives feedback information. The feedback information comes from the electronic device.

In another possible implementation, the apparatus 1600 is configured to implement the functions of the 3D glasses in the foregoing embodiment. A wireless communication module (which may be implemented by using the transceiver unit 1620) receives a first wireless signal. The processing unit 1610 decodes the first wireless signal to obtain 3D synchronization information, and controls on-off of a first liquid crystal display and a second liquid crystal display of the 3D glasses based on the 3D synchronization information. The processing unit 1610 may further obtain feedback information, encode the feedback information, convert the encoded detection information into a second wireless signal by using the wireless communication module, and send the second wireless signal.

For more detailed descriptions of the processing unit 1610 and the transceiver unit 1620, directly refer to related descriptions in the foregoing method embodiments. Details are not described herein again.

An embodiment of this application further provides an apparatus. The apparatus includes a processor and an interface circuit. The processor and the interface circuit are coupled to each other. It can be understood that the interface circuit may be a transceiver or an input/output interface. Optionally, the transceiver may include a receiver and a transmitter. Optionally, the apparatus may further include a memory, configured to: store instructions executed by the processor, or store input data required for running instructions by the processor, or store data generated after the processor runs instructions. When the apparatus is configured to implement the method shown in the foregoing embodiment of this application, the processor is configured to implement the functions of the foregoing processing unit, and the interface circuit is configured to implement the functions of the foregoing transceiver unit.

When the foregoing apparatus is a chip applied to the apparatus, the chip implements the functions of the related apparatus in the foregoing method embodiment. The chip receives information from another module (for example, a radio frequency module or an antenna) in the apparatus; or the chip sends information to another module (for example, a radio frequency module or an antenna) in the apparatus.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application further provides another example of the apparatus. The apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiment.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal. The processor and the storage medium may alternatively exist in the network device or the terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication apparatus, comprising:
a first communication interface, configured to send synchronization information, wherein the synchronization information is used to control an electronic device to perform a processing operation based on the synchronization information, so that the processing operation of the electronic device keeps synchronous with a processing operation of the communication apparatus; and
a second communication interface, configured to receive feedback information, wherein the feedback information comes from the electronic device.

2. The communication apparatus according to claim 1, wherein the second communication interface is further configured to send control information, and the control information is used to control the electronic device.

3. The communication apparatus according to either of claims 1 and 2, wherein the communication apparatus comprises a display apparatus configured to play a 3D video, the electronic device is 3D glasses, the synchronization information is 3D synchronization information, and the 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

4. The communication apparatus according to claim 3, wherein the communication apparatus further comprises a processor; and
the processor is configured to perform corresponding processing based on the feedback information from the 3D glasses, wherein performing corresponding processing comprises performing one or more of the following processing operations: adjusting display of a 3D video, displaying prompt information, and sending control information to the 3D glasses.

5. The communication apparatus according to claim 4, wherein the feedback information comprises connection status information of the 3D glasses, and performing corresponding processing comprises: displaying a connection status of the 3D glasses on a screen of the display apparatus based on the connection status information of the 3D glasses; or
the feedback information comprises battery level information of the 3D glasses, and performing corresponding processing comprises: displaying a battery level of the 3D glasses on a screen of the display apparatus based on the battery level information of the 3D glasses; or when it is determined, based on the battery level information of the 3D glasses, that the battery level is lower than a specified threshold, displaying, on the screen, prompt information indicating that the battery level is low; or
the feedback information comprises temperature information of the 3D glasses, and performing corresponding processing comprises: when it is determined, based on the temperature information of the 3D glasses, that a temperature of the 3D glasses is higher than a specified threshold, displaying, on a screen of the display apparatus, prompt information indicating that the temperature is excessively high, and/or sending control information used to indicate the 3D glasses to perform overheat protection.

6. The communication apparatus according to either of claims 4 and 5, wherein the feedback information comprises wearing status information of the 3D glasses, and performing corresponding processing comprises:
if it is determined, based on the wearing status information of the 3D glasses, that the 3D glasses are taken off, performing one or more of the following operations immediately or after a specified duration: stopping a 3D video mode, switching to a 2D video mode, and sending control information used to control the 3D glasses to be off or asleep; or
if it is determined, based on the wearing status information of the 3D glasses, that a wearing duration of the 3D glasses exceeds a specified threshold, performing one or more of the following operations: displaying, on the screen of the display apparatus, prompt information indicating that a wearing time expires, and sending control information used to control the 3D glasses to be off or asleep.

7. The communication apparatus according to any one of claims 4 to 6, wherein the feedback information comprises position information of the 3D glasses, and performing corresponding processing comprises performing one or more of the following processing operations:
adjusting, based on the position information of the 3D glasses, an image visual range of the 3D video played by the display apparatus;
adjusting, based on the position information of the 3D glasses, an image angle of view of the 3D video played by the display apparatus; and
determining a posture of a wearer based on the position information of the 3D glasses and an image of the wearer of the 3D glasses, and providing a prompt when the posture of the wearer is incorrect, wherein the image is captured by the display apparatus.

8. The communication apparatus according to any one of claims 4 to 7, wherein the feedback information comprises the position information of the 3D glasses and eyeball tracking information, and performing corresponding processing comprises:
determining, based on the position information and the eyeball tracking information, a motion trajectory of a line of sight on an image of the 3D video played by the display apparatus, and adjusting display of the image based on the motion trajectory; or
determining, based on the position information and the eyeball tracking information, a point-of-gaze position of a line of sight on an image of the 3D video played by the display apparatus, and triggering, based on the point-of-gaze position, a menu function or a menu option of a corresponding area in the image.

9. The communication apparatus according to any one of claims 4 to 8, wherein the feedback information comprises line-of-sight direction information of the 3D glasses, and performing corresponding processing comprises:
adjusting, based on a line-of-sight direction corresponding to the line-of-sight direction information, image display of the 3D video played by the display apparatus; or
determining, based on a line-of-sight direction corresponding to the line-of-sight direction information, the point-of-gaze position of the line of sight on the image of the 3D video displayed by the display apparatus, and triggering, based on the point-of-gaze position, the menu function or the menu option of the corresponding area in the image.

10. The communication apparatus according to any one of claims 4 to 9, wherein the feedback information comprises user operation information detected by the 3D glasses, and performing corresponding processing comprises: determining, based on the user operation information, an operation requested to be performed, and performing the operation requested to be performed.

11. The communication apparatus according to either of claims 1 and 2, wherein the communication apparatus comprises a playing apparatus configured to play audio, the electronic device is a speaker, and the synchronization information is used to control audio playing of the speaker to keep synchronous with audio playing of the playing apparatus; or
the communication apparatus comprises a playing apparatus configured to play audio, the electronic device comprises a light apparatus and/or a vibration apparatus, and the synchronization information is used to control light change of the light apparatus and/or vibration of the vibration apparatus to keep synchronous with a rhythm of audio played by the playing apparatus; or
the communication apparatus comprises a first light apparatus, the electronic device comprises a second light apparatus, and the synchronization information is used to control light change of the second light apparatus to keep synchronous with light change of the first light apparatus; or
the communication apparatus comprises a first vibration apparatus, the electronic device comprises a second vibration apparatus, and the synchronization information is used to control a vibration frequency of the second vibration apparatus to keep synchronous with a vibration frequency of the first vibration apparatus.

12. The communication apparatus according to any one of claims 1 to 11, further comprising a switch, wherein
the switch is configured to: when the communication apparatus is connected to the electronic device, set the first communication interface to be configured to send the synchronization information.

13. The communication apparatus according to any one of claims 1 to 12, wherein
when the communication apparatus is connected to a first device, the switch is further configured to switch the first communication interface to an interface configured to send corresponding information to the first device, wherein the first device is of a device type other than the electronic device.

14. The communication apparatus according to any one of claims 1 to 13, wherein a universal communication interface is disposed on the communication apparatus, and the first communication interface is at least one pin of the universal communication interface.

15. The communication apparatus according to claim 14, wherein the universal communication interface is a universal serial bus USB interface or an Ethernet interface.

16. The communication apparatus according to any one of claims 1 to 15, wherein the communication apparatus is a large-screen display device.

17. The communication apparatus according to any one of claims 1 to 16, further comprising a wireless communication apparatus, wherein the wireless communication apparatus is connected to the first communication interface, and the wireless communication apparatus is configured to: convert the synchronization information from the first communication interface into a first wireless signal, and send the first wireless signal.

18. A communication method, applied to a communication apparatus, wherein the method comprises:
sending synchronization information, wherein the synchronization information is used to control an electronic device to perform a processing operation based on the synchronization information, so that the processing operation of the electronic device keeps synchronous with a processing operation of the communication apparatus; and
receiving feedback information, wherein the feedback information comes from the electronic device.

19. The method according to claim 18, further comprising:
sending control information, wherein the control information is used to control the electronic device.

20. The method according to either of claims 18 and 19, wherein the communication apparatus comprises a display apparatus configured to play a 3D video, the electronic device is 3D glasses, the synchronization information is 3D synchronization information, and the 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

21. The method according to claim 20, further comprising:
performing corresponding processing based on the feedback information, wherein performing corresponding processing comprises performing one or more of the following processing operations: adjusting display of a 3D video, displaying prompt information, and sending control information to the 3D glasses.

22. The method according to either of claims 18 and 19, wherein the communication apparatus comprises a playing apparatus configured to play audio, the electronic device is a speaker, and the synchronization information is used to control audio playing of the speaker to keep synchronous with audio playing of the playing apparatus; or
the communication apparatus comprises a playing apparatus configured to play audio, the electronic device comprises a light apparatus and/or a vibration apparatus, and the synchronization information is used to control light change of the light apparatus and/or vibration of the vibration apparatus to keep synchronous with a rhythm of audio played by the playing apparatus; or
the communication apparatus comprises a first light apparatus, the electronic device comprises a second light apparatus, and the synchronization information is used to control light change of the second light apparatus to keep synchronous with light change of the first light apparatus; or
the communication apparatus comprises a first vibration apparatus, the electronic device comprises a second vibration apparatus, and the synchronization information is used to control a vibration frequency of the second vibration apparatus to keep synchronous with a vibration frequency of the first vibration apparatus.

23. A communication system, comprising the communication apparatus according to any one of claims 1 to 17 and an electronic device.

24. The communication system according to claim 23, wherein the electronic device comprises a processing module and a communication interface; and
the processing module is configured to: receive synchronization information from the communication apparatus via the communication interface, and perform a processing operation based on the synchronization information, so that the processing operation of the electronic device keeps synchronous with a processing operation of the communication apparatus; and
obtain feedback information, and send the feedback information via the communication interface.

25. The communication system according to either of claims 23 and 24, wherein the electronic device is 3D glasses, the communication apparatus comprises a display apparatus configured to play a 3D video, the synchronization information is 3D synchronization information, and the 3D synchronization information is used to drive on-off switching of a left-eye liquid crystal display and a right-eye liquid crystal display of the 3D glasses, so that on-off switching of the left-eye liquid crystal display and the right-eye liquid crystal display keeps synchronous with switching of a left-eye image and a right-eye image when the display apparatus plays the 3D video.

26. An apparatus, comprising a processor and an interface circuit, wherein the interface circuit is configured to: receive a signal from an apparatus other than the apparatus and transmit the signal to the processor, or send a signal from the processor to an apparatus other than the apparatus; and the processor is configured to implement the method according to any one of claims 18 to 22 by using a logic circuit or by executing code instructions.

27. A computer-readable storage medium, wherein the computer-readable storage medium stores a computer program or instructions, and when the computer program or the instructions are executed by a communication apparatus, the method according to any one of claims 18 to 22 is implemented.

28. A chip system, comprising: a memory, configured to store a computer program; and a processor, wherein after the processor invokes the computer program from the memory and runs the computer program, a communication apparatus on which the chip system is installed is enabled to perform the method according to any one of claims 18 to 22.

29. A computer program product, wherein when the computer program product runs on a communication apparatus, the communication apparatus performs the method according to any one of claims 18 to 22.
